(19) Europäisches Patentamt / European Patent Office / Office européen des brevets

(11) **EP 4 383 635 A1**

(12) **EUROPEAN PATENT APPLICATION**
published in accordance with Art. 153(4) EPC

(43) Date of publication:
**12.06.2024 Bulletin 2024/24**

(21) Application number: **22863228.7**

(22) Date of filing: **23.08.2022**

(51) International Patent Classification (IPC):
**H04L 5/00** (2006.01)

(52) Cooperative Patent Classification (CPC):
**H04L 5/00; H04W 28/12**

(86) International application number:
**PCT/CN2022/114189**

(87) International publication number:
**WO 2023/030089 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.09.2021 CN 202111021931**

(71) Applicant: **Huawei Technologies Co., Ltd.**
**Shenzhen, Guangdong 518129 (CN)**

(72) Inventors:
• **YUAN, Shitong**
  **Shenzhen, Guangdong 518129 (CN)**
• **LIU, Fengwei**
  **Shenzhen, Guangdong 518129 (CN)**
• **SONG, Xinghua**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **GUARD SYMBOL CONFIGURATION METHOD AND COMMUNICATION DEVICE**

(57) A guard symbol configuration method and a communication apparatus are provided, so that a first node indicates, to a second node, a number of guard symbols used or expected to be used in a larger subcarrier spacing, to avoid a scheduling conflict. The method in embodiments of this application includes: The first node sends a first medium access control control element MAC CE to the second node, where the first MAC CE indicates a number of guard symbols used in a first subcarrier spacing. The first node sends a second MAC CE to the second node, where the first MAC CE and the second MAC CE are jointly used to determine a number of guard symbols used or expected to be used in a second subcarrier spacing.

FIG. 3

First node → Second node: 301. First MAC CE

First node → Second node: 302. Second MAC CE

Second node: 303. Determine, based on the first MAC CE and the second MAC CE, a number of guard symbols used or expected to be used in a second subcarrier spacing

**EP 4 383 635 A1**

**Description**

This application claims priority to Chinese Patent Application No. 202111021931.6, filed with the China National Intellectual Property Administration on September 1, 2021 and entitled "GUARD SYMBOL CONFIGURATION METHOD AND COMMUNICATION APPARATUS", which is incorporated herein by reference in its entirety.

**TECHNICAL FIELD**

This application relates to the field of communication technologies, and in particular, to a guard symbol configuration method and a communication apparatus.

**BACKGROUND**

To obtain higher bandwidth, the new radio 17 (new radio, NR-17) standard plans to discuss use of a spectrum above 52.6 GHz (gigahertz). In a 52.6 GHz frequency band, a typical characteristic is that bandwidth is high enough, and continuous spectrums above 2G may be available. Another characteristic is that phase noise impact is further increased, and a higher-level subcarrier spacing (subcarrier spacing, SCS) may be needed to cope with the phase noise impact. Therefore, for a spectrum above 52.6 GHz, a larger subcarrier spacing needs to be used, for example, a subcarrier spacing of 480 kHz (kilohertz) or 960 kHz.

Based on the Release 16 (release 16, Rel-16), a guard symbol (guard symbol) is specified for an integrated access and backhaul (integrated access and backhaul, IAB) node. In a process in which the IAB node switches from receiving and sending of an integrated access and backhaul mobile terminal (IAB mobile terminal, IAB MT) to receiving and sending of an integrated access and backhaul distributed unit (IAB distributed unit, IAB DU), reserved symbols are needed to avoid a scheduling conflict; or in a process in which the IAB node switches from receiving and sending of an IAB DU to receiving and sending of an IAB MT, reserved symbols are needed to avoid a scheduling conflict. The reserved symbols may be referred to as guard symbols. A larger subcarrier spacing, for example, a subcarrier spacing of 480 kHz or 960 kHz, needs to be used for the spectrum above 52.6 GHz. Therefore, how the IAB node indicates, to another IAB node for the larger subcarrier spacing, a number of guard symbols that need to be reserved in the larger subcarrier spacing is a problem that needs to be urgently resolved currently.

**SUMMARY**

This application provides a guard symbol configuration method and a communication apparatus, so that a first node indicates, to a second node, a number of guard symbols used or expected to be used in a larger subcarrier spacing, to avoid a scheduling conflict.

A first aspect of this application provides a guard symbol configuration method, including:

A first node sends a first medium access control control element (medium access control control element, MAC CE) to a second node, where the first MAC CE indicates a number of guard symbols used in a first subcarrier spacing. The first node sends a second MAC CE to the second node, where the first MAC CE and the second MAC CE are jointly used to determine a number of guard symbols used or expected to be used in a second subcarrier spacing.

It can be learned from the foregoing technical solution that the first node indicates, by using the two MAC CEs, the number of guard symbols used or expected to be used in the second subcarrier spacing. Therefore, according to the technical solution of this application, the first node may indicate a number of guard symbols used or expected to be used in a larger subcarrier spacing. This helps the second node determine the number of guard symbols used or expected to be used in the second subcarrier spacing, to avoid a scheduling conflict. In addition, the first node indicates, by using the two MAC CEs, the number of guard symbols used or expected to be used in the larger subcarrier spacing, without a need of changing a format of the MAC CE. This facilitates implementation of the solution.

In a possible implementation, the number of guard symbols used or expected to be used in the second subcarrier spacing is obtained by multiplying the number of guard symbols that is indicated by the first MAC CE by a first ratio and then adding a number of guard symbols that is indicated by the second MAC CE, and the first ratio is a ratio of the second subcarrier spacing to the first subcarrier spacing.

This possible implementation shows a specific calculation manner of the number that is of guard symbols used or expected to be used in the second subcarrier spacing and that is obtained through calculation with reference to the first MAC CE and the second MAC CE. This facilitates implementation of the solution. In this way, the first node may indicate the number of guard symbols used or expected to be used in the larger subcarrier spacing, to avoid the scheduling conflict. This helps the second node determine the number of guard symbols used or expected to be used in the second subcarrier spacing.

In another possible implementation, the first node is an IAB MT, and the second node is an IAB DU or a donor distributed unit (donor distributed unit, Donor DU); or

the first node is an IAB DU or a donor DU, and the second node is an IAB MT.

In this possible implementation, specific forms of the first node and the second node are provided. The specific forms of the first node and the second node are used to illustrate two possible scenarios to which the technical solution of this application is applicable. Specifically, the IAB MT may indicate, to an upper-level node, a number of guard symbols that the IAB MT expects to use in the second subcarrier spacing, or an upper-level node may indicate, to the IAB MT, a number of guard symbols used by the IAB MT in the second subcarrier spacing.

In another possible implementation, the first subcarrier spacing is 15 kHz, 30 kHz, 60 kHz, or 120 kHz, and the second subcarrier spacing is 480 kHz or 960 kHz.

The foregoing implementation shows some specific sizes of the first subcarrier spacing and the second subcarrier spacing. The first subcarrier spacing is less than the second subcarrier spacing. Optionally, the second subcarrier spacing is an integer multiple relationship of the first subcarrier spacing. In other words, the first node may indicate, by using the first MAC CE, a number of guard symbols that need to be reserved in a small subcarrier spacing. Then, the first node sends the second MAC CE, so that the second node determines, by jointly using the first MAC CE and the second MAC CE, a number of guard symbols that need to be reserved in a larger subcarrier spacing.

In another possible implementation, the second MAC CE includes an SCS field, and a value of the SCS field indicates the second subcarrier spacing.

This implementation shows a possible implementation in which the first node indicates the second subcarrier spacing to the second node. In other words, the SCS field included in the second MAC CE indicates the second subcarrier spacing, so that the second subcarrier spacing is indicated without changing the format of the MAC CE.

In another possible implementation, the second subcarrier spacing is a subcarrier spacing used by a bandwidth part (bandwidth part, BWP) in a carrier of the second node, the subcarrier spacing is 480 kHz or 960 kHz, and the carrier of the second node is a carrier used by the first node to schedule the second node to receive the second MAC CE;

the second subcarrier spacing is a subcarrier spacing used by an active BWP in a carrier of the second node, the subcarrier spacing is 480 kHz or 960 kHz, and the carrier of the second node is a carrier used by the first node to schedule the second node to receive the second MAC CE;

the second subcarrier spacing is a maximum subcarrier spacing of any BWP in a carrier of the second node, and the carrier of the second node is a carrier used by the first node to schedule the second node to receive the second MAC CE; or

the second subcarrier spacing is a maximum subcarrier spacing of an active BWP in a carrier of the second node, and the carrier of the second node is a carrier used by the first node to schedule the second node to receive the second MAC CE.

This implementation shows another possible implementation in which the first node indicates the second subcarrier spacing to the second node. The first node implicitly indicates a size of the second subcarrier spacing by using a subcarrier for scheduling the second node to receive the second MAC CE.

In another possible implementation, a reserved bit in the first MAC CE indicates that the first MAC CE is a first-type MAC CE, and a reserved bit in the second MAC CE indicates that the second MAC CE is a second-type MAC CE.

This possible implementation shows a specific implementation in which the first node indicates that the first MAC CE is the first-type MAC CE and the second MAC CE is the second-type MAC CE. The first-type MAC CE is a conventional MAC CE, and the second-type MAC CE is an additionally indicated MAC CE. In this implementation, the first node indicates a type of a MAC CE based on a reserved bit (a bit that is currently not used) in the MAC CE, without a need of changing a format of the MAC CE.

In a possible implementation, the method further includes:

The first node maps the first MAC CE to a first logical channel, and maps the second MAC CE to a second logical channel, where the first MAC CE mapped to the first logical channel is a first-type MAC CE, and the second MAC CE mapped to the second logical channel is a second-type MAC CE.

That a first node sends a first MAC CE to a second node includes:

The first node sends the first MAC CE to the second node through the first logical channel.

That the first node sends a second MAC CE to the second node includes:

The first node sends the second MAC CE to the second node through the second logical channel.

This possible implementation shows another specific implementation in which the first node indicates that the first MAC CE is the first-type MAC CE and the second MAC CE is the second-type MAC CE. To be specific, the first node maps the first MAC CE and the second MAC CE to different logical channels, to indicate the type of the MAC CE. This enriches implementation of the solution.

In another possible implementation, the number of guard symbols used or expected to be used in the second subcarrier spacing in Scenario x is $NmbGS_x = N * NmbGS_x^1 + NmbGS_x^2$ .

N is a ratio of the second subcarrier spacing to the first subcarrier spacing, $NmbGS_x^1$ is a number of guard symbols that is indicated by a field $NmbGS_x$ in the first MAC CE, $NmbGS_x^2$ is a number of guard symbols that is indicated by a field $NmbGS_x$ in the second MAC CE, and x is an integer greater than or equal to 1 and less than or equal to 8.

Scenario x includes any one of the following:

the IAB node switches from downlink receiving of the IAB MT to downlink sending of the IAB DU;
the IAB node switches from downlink receiving of the IAB MT to uplink receiving of the IAB DU;
the IAB node switches from uplink sending of the IAB MT to downlink sending of the IAB DU;
the IAB node switches from uplink sending of the IAB MT to uplink receiving of the IAB DU;
the IAB node switches from downlink receiving of the IAB DU to downlink sending of the IAB MT;
the IAB node switches from downlink receiving of the IAB DU to uplink receiving of the IAB MT;
the IAB node switches from uplink sending of the IAB DU to downlink sending of the IAB MT; or
the IAB node switches from uplink sending of the IAB DU to uplink receiving of the IAB MT.

This implementation shows the number of guard symbols used or expected to be used in the second subcarrier spacing for each of the plurality of scenarios, to separately indicate numbers that are of guard symbols that need to be reserved and that are in the second subcarrier spacing in the plurality of scenarios.

A second aspect of this application provides a guard symbol configuration method, including:
A second node receives a first MAC CE from a first node, where the first MAC CE indicates a number of guard symbols used in a first subcarrier spacing. The second node receives a second MAC CE from the first node. The second node determines, based on the first MAC CE and the second MAC CE, a number of guard symbols used or expected to be used in a second subcarrier spacing.

It can be learned from the foregoing technical solution that the second node determines, based on the first MAC CE and the second MAC CE, the number of guard symbols used or expected to be used in the second subcarrier spacing. Therefore, according to the technical solution of this application, the first node may indicate a number of guard symbols used or expected to be used in a larger subcarrier spacing. The second node may determine, by jointly using the two MAC CEs, the number of guard symbols used or expected to be used in the second subcarrier spacing, to avoid a scheduling conflict. In addition, the first node indicates, by using the two MAC CEs, the number of guard symbols used or expected to be used in the larger subcarrier spacing, without a need of changing a format of the MAC CE. This facilitates implementation of the solution.

In a possible implementation, that the second node determines, based on the first MAC CE and the second MAC CE, a number of guard symbols used or expected to be used in a second subcarrier spacing includes:
The second node obtains, by multiplying the number of guard symbols that is indicated by the first MAC CE by a first ratio and then adding a number of guard symbols that is indicated by the second MAC CE, the number of guard symbols used or expected to be used in the second subcarrier spacing, where the first ratio is a ratio of the second subcarrier spacing to the first subcarrier spacing.

This possible implementation shows a specific calculation manner of the number that is of guard symbols used or expected to be used in the second subcarrier spacing and that is obtained through calculation by the second node with reference to the first MAC CE and the second MAC CE. This facilitates implementation of the solution. In this way, the second node determines the number of guard symbols used or expected to be used in the larger subcarrier spacing.

In another possible implementation, the first node is an IAB MT, and the second node is an IAB DU or a donor DU; or the first node is an IAB DU or a donor DU, and the second node is an IAB MT.

In this possible implementation, specific forms of the first node and the second node are provided. The specific forms of the first node and the second node are used to illustrate two possible scenarios to which the technical solution of this application is applicable. Specifically, the IAB MT may indicate, to an upper-level node, a number of guard symbols that the IAB MT expects to use in the second subcarrier spacing, or an upper-level node may indicate, to the IAB MT, a number of guard symbols used by the IAB MT in the second subcarrier spacing.

In another possible implementation, the first subcarrier spacing is 15 kHz, 30 kHz, 60 kHz, or 120 kHz, and the second subcarrier spacing is 480 kHz or 960 kHz.

The foregoing implementation shows some specific sizes of the first subcarrier spacing and the second subcarrier spacing. The first subcarrier spacing is less than the second subcarrier spacing. Optionally, the second subcarrier spacing is an integer multiple relationship of the first subcarrier spacing. In other words, the first node may indicate, by using the first MAC CE, a number of guard symbols that need to be reserved in a small subcarrier spacing. Then, the first node sends the second MAC CE, so that the second node determines, by jointly using the first MAC CE and the second MAC CE, a number of guard symbols that need to be reserved in a larger subcarrier spacing.

In another possible implementation, the second MAC CE includes an SCS field, and a value of the SCS field indicates the second subcarrier spacing.

This implementation shows a possible implementation in which the first node indicates the second subcarrier spacing to the second node. In other words, the SCS field included in the second MAC CE indicates the second subcarrier spacing, so that the second subcarrier spacing is indicated without changing the format of the MAC CE.

In another possible implementation, the method further includes:

The second node determines the second subcarrier spacing based on the SCS field in the second MAC CE and a second correspondence, where the second correspondence is a correspondence between the value of the SCS field in the second MAC CE and a subcarrier spacing.

This possible implementation shows a specific implementation in which the second node determines the second subcarrier spacing, so that the second node determines the second subcarrier spacing.

In another possible implementation, the second subcarrier spacing is a subcarrier spacing used by a BWP in a carrier of the second node, the subcarrier spacing is 480 kHz or 960 kHz, and the carrier of the second node is a carrier used by the first node to schedule the second node to receive the second MAC CE;

the second subcarrier spacing is a subcarrier spacing used by an active BWP in a carrier of the second node, the subcarrier spacing is 480 kHz or 960 kHz, and the carrier of the second node is a carrier used by the first node to schedule the second node to receive the second MAC CE;
the second subcarrier spacing is a maximum subcarrier spacing of any BWP in a carrier of the second node, and the carrier of the second node is a carrier used by the first node to schedule the second node to receive the second MAC CE; or
the second subcarrier spacing is a maximum subcarrier spacing of an active BWP in a carrier of the second node, and the carrier of the second node is a carrier used by the first node to schedule the second node to receive the second MAC CE.

This implementation shows another possible implementation in which the first node indicates the second subcarrier spacing to the second node. The first node implicitly indicates a size of the second subcarrier spacing by using a subcarrier for scheduling the second node to receive the second MAC CE.

In another possible implementation, before the second node determines, based on the first MAC CE and the second MAC CE, the number of guard symbols used or expected to be used in the second subcarrier spacing, the method further includes:

The second node determines, based on a reserved bit in the first MAC CE, that the first MAC CE is a first-type MAC CE.

The second node determines, based on a reserved bit in the second MAC CE, that the second MAC CE is a second-type MAC CE.

This possible implementation shows a specific implementation in which the first node indicates that the first MAC CE is the first-type MAC CE and the second MAC CE is the second-type MAC CE. The first-type MAC CE is a conventional MAC CE, and the second-type MAC CE is an additionally indicated MAC CE. In this implementation, the first node indicates a type of a MAC CE based on a reserved bit (a bit that is currently not used) in the MAC CE, without a need of changing a format of the MAC CE.

In another possible implementation, that a second node receives a first MAC CE from a first node includes:
The second node receives the first MAC CE from the first node through a first logical channel.

That the second node receives a second MAC CE from the first node includes:

The second node receives the second MAC CE from the first node through a second logical channel.

The method further includes:

The second node determines, through the first logical channel, that the first MAC CE is a first-type MAC CE, and determines, through the second logical channel, that the second MAC CE is a second-type MAC CE.

This possible implementation shows another specific implementation in which the first node indicates that the first MAC CE is the first-type MAC CE and the second MAC CE is the second-type MAC CE. To be specific, the first node maps the first MAC CE and the second MAC CE to different logical channels, to indicate the type of the MAC CE. This enriches implementation of the solution.

In another possible implementation, the number of guard symbols used or expected to be used in the second subcarrier spacing in Scenario x is

$$NmbGS_x = N * NmbGS_x^1 + NmbGS_x^2$$, where

$$NmbGS_x^1$$

N is a ratio of the second subcarrier spacing to the first subcarrier spacing, $NmbGS_x^1$ is a number of guard symbols

$$NmbGS_x^2$$

that is indicated by a field $NmbGS_x$ in the first MAC CE, $NmbGS_x^2$ is a number of guard symbols that is indicated by a field $NmbGS_x$ in the second MAC CE, and x is an integer greater than or equal to 1 and less than or equal to 8.

Scenario x includes any one of the following:

the IAB node switches from downlink receiving of the IAB MT to downlink sending of the IAB DU;
the IAB node switches from downlink receiving of the IAB MT to uplink receiving of the IAB DU;
the IAB node switches from uplink sending of the IAB MT to downlink sending of the IAB DU;
the IAB node switches from uplink sending of the IAB MT to uplink receiving of the IAB DU;
the IAB node switches from downlink receiving of the IAB DU to downlink sending of the IAB MT;
the IAB node switches from downlink receiving of the IAB DU to uplink receiving of the IAB MT;
the IAB node switches from uplink sending of the IAB DU to downlink sending of the IAB MT; or
the IAB node switches from uplink sending of the IAB DU to uplink receiving of the IAB MT.

This implementation shows the number of guard symbols used or expected to be used in the second subcarrier spacing for each of the plurality of scenarios, to separately indicate numbers that are of guard symbols that need to be reserved and that are in the second subcarrier spacing in the plurality of scenarios.

A third aspect of this application provides a guard symbol configuration method, including:
A first node generates a first MAC CE, where the first MAC CE indicates a number of guard symbols used or expected to be used in a subcarrier spacing of 480 kHz or 960 kHz. The first node sends the first MAC CE to a second node.

In the foregoing technical solution, the first node may indicate, by using the first MAC CE, a number of guard symbols used or expected to be used in a larger subcarrier spacing, to indicate a number of guard symbols that need to be reserved in the larger subcarrier spacing. The first node indicates, by using one MAC CE, the number of guard symbols used or expected to be used in a larger subcarrier spacing, to avoid a scheduling conflict. The number of guard symbols that need to be reserved in the larger subcarrier spacing can be indicated without adding additional signaling, so that the solution is easy to implement. In other words, the number of guard symbols that need to be reserved in the larger subcarrier spacing is indicated without increasing signaling overheads.

In a possible implementation, a reserved bit in the first MAC CE indicates that an SCS field in the first MAC CE indicates the subcarrier spacing of 480 kHz or 960 kHz.

This possible implementation shows a specific implementation in which the first node indicates the subcarrier spacing of 480 kHz or 960 kHz to the second node. The reserved bit in the MAC CE is a bit that is currently not used, and the first node indicates the subcarrier spacing of 480 kHz or 960 kHz by using the reserved bit. The subcarrier spacing of 480 kHz or 960 kHz can be indicated, and a bit in the MAC CE can be fully used. An unnecessary bit does not need to be added, reducing bit overheads.

In a possible implementation, the method further includes:
The first node schedules the second node to receive the first MAC CE by using a carrier of the second node, where at least one BWP in the carrier of the second node uses the subcarrier spacing of 480 kHz or 960 kHz, or an active BWP in the carrier uses the subcarrier spacing of 480 kHz or 960 kHz.

In this possible implementation, the first node implicitly indicates, by using a carrier for scheduling the second node to receive the first MAC CE, that the first MAC CE indicates the number of guard symbols used or expected to be used in the subcarrier spacing of 480 kHz or 960 kHz.

In another possible implementation, the first node is an IAB MT, and the second node is an IAB DU or a donor DU; or the first node is an IAB DU or a donor DU, and the second node is an IAB MT.

In this possible implementation, specific forms of the first node and the second node are provided. The specific forms of the first node and the second node are used to illustrate two possible scenarios to which the technical solution of this application is applicable. Specifically, the IAB MT may indicate, to an upper-level node, a number of guard symbols that the IAB MT expects to use in the second subcarrier spacing, or an upper-level node may indicate, to the IAB MT, a number of guard symbols used by the IAB MT in the second subcarrier spacing.

In another possible implementation, that a first node generates a first MAC CE includes:
The first node determines the number of guard symbols used or expected to be used in the subcarrier spacing of 480 kHz or 960 kHz in each of a plurality of scenarios, where the plurality of scenarios are a plurality of receive/transmit conversion scenarios between the IAB MT and the IAB DU in an IAB node.

The first node determines, based on a first correspondence and the number of guard symbols used or expected to be used in the subcarrier spacing of 480 kHz or 960 kHz in each scenario, a value that is of a number of guard symbols (number of guard symbols, NmbGS) field in the first MAC CE and that corresponds to each scenario, where the first correspondence is a correspondence between the value of the NmbGS field and the number of guard symbols.

This possible implementation illustrates a specific implementation in which the first node generates the first MAC CE. The first node determines the number of guard symbols used or expected to be used in the subcarrier spacing of 480 kHz or 960 kHz in each scenario, and determines, based on the correspondence between the value of the NmbGS field and the number of guard symbols, the number of guard symbols used or expected to be used in the subcarrier spacing of 480 kHz or 960 kHz in the first MAC CE in each scenario, to indicate the number of guard symbols used or expected to be used in the subcarrier spacing of 480 kHz or 960 kHz in each scenario.

In a possible implementation, the method further includes:
The first node sends first configuration information to the second node, where the first configuration information indicates the first correspondence.

In this possible implementation, the first node indicates the first correspondence to the second node, so that the second node determines, based on the first correspondence, a number of guard symbols that need to be reserved in the subcarrier spacing of 480 kHz or 960 kHz.

A fourth aspect of this application provides a guard symbol configuration method, including:
A second node receives a first MAC CE from a first node. The second node determines, based on the first MAC CE, a number of guard symbols used or expected to be used in a subcarrier spacing of 480 kHz or 960 kHz.

In the foregoing technical solution, the first node may indicate, by using the first MAC CE, a number of guard symbols used or expected to be used in the larger subcarrier spacing. This helps the second node determine, based on the first MAC CE, the number of guard symbols used or expected to be used in the larger subcarrier spacing, to avoid a scheduling conflict. The first node indicates, by using one MAC CE, the number of guard symbols used or expected to be used in a larger subcarrier spacing. The number of guard symbols that need to be reserved in the larger subcarrier spacing can be indicated without adding additional signaling, so that the solution is easy to implement. In other words, the number of guard symbols that need to be reserved in the larger subcarrier spacing is indicated without increasing signaling overheads.

In a possible implementation, that the second node determines, based on the first MAC CE, a number of guard symbols used or expected to be used in a subcarrier spacing of 480 kHz or 960 kHz includes:

The second node determines, based on a first correspondence and a value that is of an NmbGS field in the first MAC CE and that corresponds to each of a plurality of scenarios, the number of guard symbols used or expected to be used in the subcarrier spacing of 480 kHz or 960 kHz in each scenario, where the first correspondence is a correspondence between the value of the NmbGS field and the number of guard symbols, and the plurality of scenarios are a plurality of receive/transmit conversion scenarios between an IAB MT and an IAB DU in the IAB node.

This possible implementation illustrates a specific implementation in which the second node determines the number of guard symbols used or expected to be used in the subcarrier spacing of 480 kHz or 960 kHz in each scenario. This facilitates implementation of the solution.

In another possible implementation, before the second node determines, based on the first MAC CE, the number of guard symbols used or expected to be used in the subcarrier spacing of 480 kHz or 960 kHz, the method further includes:
When a first condition is met, the second node determines that the first MAC CE indicates the number of guard symbols used or expected to be used in the subcarrier spacing of 480 kHz or 960 kHz.

The first condition includes any one of the following:

a reserved bit in the first MAC CE indicates that an SCS field in the first MAC CE indicates the subcarrier spacing of 480 kHz or the subcarrier spacing of 960 kHz;
at least one BWP in a carrier used by the second node used to receive the first MAC CE uses the subcarrier spacing of 480 kHz or 960 kHz; or
an active BWP in a carrier used by the second node to receive the first MAC CE uses the subcarrier spacing of 480 kHz or 960 kHz.

This possible implementation shows some possible conditions for determining, by the first node, that the first MAC CE indicates the number of guard symbols used or expected to be used in the subcarrier spacing of 480 kHz or 960 kHz, so that the solution is more comprehensive. For example, the reserved bit in the first MAC CE indicates that the SCS field in the first MAC CE indicates the subcarrier spacing of 480 kHz or the subcarrier spacing of 960 kHz. The reserved bit in the MAC CE is a bit that is currently not used. The subcarrier spacing of 480 kHz or 960 kHz can be indicated, and a bit in the MAC CE can be fully used. An unnecessary bit does not need to be added, reducing bit overheads. For example, the second node determines, by using a carrier used by the second node to receive the first MAC CE, that the first MAC CE indicates the number of guard symbols used or expected to be used in the subcarrier spacing of 480 kHz or 960 kHz. This solution is an implicit indication manner, and a corresponding bit does not need to be used for indication.

In another possible implementation, the first node is an IAB MT, and the second node is an IAB DU or a donor DU; or the first node is an IAB DU or a donor DU, and the second node is an IAB MT.

In this possible implementation, specific forms of the first node and the second node are provided. The specific forms of the first node and the second node are used to illustrate two possible scenarios to which the technical solution of this application is applicable. Specifically, the IAB MT may indicate, to an upper-level node, a number of guard symbols that the IAB MT expects to use in the second subcarrier spacing, or an upper-level node may indicate, to the IAB MT, a number of guard symbols used by the IAB MT in the second subcarrier spacing.

In a possible implementation, the method further includes:

The second node receives first configuration information from the first node, where the first configuration information indicates the first correspondence.

In this possible implementation, the first node indicates the first correspondence to the second node, so that the second node determines, based on the first correspondence, a number of guard symbols that need to be reserved in the subcarrier spacing of 480 kHz or 960 kHz.

A fifth aspect of this application provides a guard symbol configuration method, including:

A first node sends first indication information to a second node, where the first indication information indicates a first offset value or a first scaling value, the first offset value is an offset value of a number of guard symbols, and the first scaling value is a scaling value of the number of guard symbols. The first node sends a first MAC CE to the second node, where the first MAC CE indicates the number of guard symbols, and the first MAC CE and the first offset value are jointly used to determine a number of guard symbols used or expected to be used in a subcarrier spacing of 480 kHz or 960 kHz, or the first MAC CE and the first scaling value are jointly used to determine a number of guard symbols used or expected to be used in a subcarrier spacing of 480 kHz or 960 kHz.

It can be learned from the foregoing technical solution that the first node indicates, by using the first MAC CE and the first offset value, or by using the first MAC CE and the first scaling value, the number of guard symbols used or expected to be used in the subcarrier spacing of 480 kHz or 960 kHz. Therefore, according to the technical solution of this application, the first node may indicate a number of guard symbols used or expected to be used in a larger subcarrier spacing, so that the second node determines the number of guard symbols used or expected to be used in the larger subcarrier spacing, to avoid a scheduling conflict, without a need of changing a format of the MAC CE. This facilitates implementation of the solution.

In a possible implementation, the first MAC CE indicates a number of guard symbols corresponding to each of a plurality of scenarios, and the plurality of scenarios include a plurality of receive/transmit conversion scenarios between an IAB MT and an IAB DU in an IAB node.

The number of guard symbols used or expected to be used in the subcarrier spacing of 480 kHz or 960 kHz in each of the plurality of scenarios is a number of guard symbols that corresponds to each scenario and that is indicated by the first MAC CE plus the first offset value.

This possible implementation shows a manner of determining, with reference to the first offset value and the first MAC CE, the number of guard symbols used or expected to be used in the subcarrier spacing of 480 kHz or 960 kHz in each scenario. This facilitates implementation of the solution. The same offset value is used in the plurality of scenarios. The solution is simple and easy to implement.

In another possible implementation, the first MAC CE indicates a number of guard symbols corresponding to each of a plurality of scenarios, and the plurality of scenarios include a plurality of receive/transmit conversion scenarios between an IAB MT and an IAB DU in an IAB node.

The first indication information is used to configure an offset value corresponding to each of the plurality of scenarios, and the offset value corresponding to each scenario is an offset value of the number of guard symbols that is indicated by the first MAC CE for each scenario.

The number of guard symbols used or expected to be used in the subcarrier spacing of 480 kHz or 960 kHz in each of the plurality of scenarios is a number of guard symbols that corresponds to each scenario and that is indicated by the first MAC CE plus the offset value corresponding to each scenario.

This possible implementation shows a manner of determining, with reference to the offset value corresponding to each scenario and the first MAC CE, the number of guard symbols used or expected to be used in the subcarrier spacing of 480 kHz or 960 kHz in each scenario. This facilitates implementation of the solution. Each of the plurality of scenarios has a corresponding offset value. This helps indicate a corresponding offset value with reference to a switching time (related to a capability of the IAB node) required by the IAB node in various scenarios, and helps indicate a more appropriate number of guard symbols for each scenario, to improve practicability of the solution.

In another possible implementation, the first MAC CE indicates a number of guard symbols corresponding to each of a plurality of scenarios, and the plurality of scenarios include a plurality of receive/transmit conversion scenarios between an IAB MT and an IAB DU in an IAB node.

The number of guard symbols used or expected to be used in the subcarrier spacing of 480 kHz or 960 kHz in each of the plurality of scenarios is obtained by multiplying a number of guard symbols that corresponds to each scenario and that is indicated by the first MAC CE by the first scaling value.

This possible implementation shows a manner of determining, with reference to the first scaling value and the first MAC CE, the number of guard symbols used or expected to be used in the subcarrier spacing of 480 kHz or 960 kHz in each scenario, so that the solution is more abundant and comprehensive.

In another possible implementation, the first node is an IAB MT, and the second node is an IAB DU or a donor DU; or the first node is an IAB DU or a donor DU, and the second node is an IAB MT.

In this possible implementation, specific forms of the first node and the second node are provided. The specific forms of the first node and the second node are used to illustrate two possible scenarios to which the technical solution of this application is applicable. Specifically, the IAB MT may indicate, to an upper-level node, a number of guard symbols that the IAB MT expects to use in the second subcarrier spacing, or an upper-level node may indicate, to the IAB MT, a number of guard symbols used by the IAB MT in the second subcarrier spacing.

In a possible implementation, the method further includes:
The first node schedules the second node to receive the first MAC CE by using a carrier of the second node, where at least one BWP in the carrier of the second node uses the subcarrier spacing of 480 kHz or 960 kHz, or an active BWP in the carrier uses the subcarrier spacing of 480 kHz or 960 kHz.

In this possible implementation, the first node implicitly indicates, by using a carrier for scheduling the second node to receive the first MAC CE, that the first MAC CE indicates the number of guard symbols used or expected to be used in the subcarrier spacing of 480 kHz or 960 kHz.

A sixth aspect of this application provides a guard symbol configuration method, including:
A second node receives first indication information from a first node, where the first indication information indicates a first offset value or a first scaling value, the first offset value is an offset value of a number of guard symbols, and the first scaling value is a scaling value of the number of guard symbols. The second node receives a first MAC CE from the first node. The second node determines, based on the first offset value and the first MAC CE, a number of guard symbols used or expected to be used in a subcarrier spacing of 480 kHz or 960 kHz, or determines, based on the first scaling value and the first MAC CE, a number of guard symbols used or expected to be used in a subcarrier spacing of 480 kHz or 960 kHz.

It can be learned from the foregoing technical solution that the first node indicates, by using the first MAC CE and the first offset value, or by using the first MAC CE and the first scaling value, the number of guard symbols used or expected to be used in the subcarrier spacing of 480 kHz or 960 kHz. In this way, the second node determines, with reference to the first MAC CE and the first offset value, the number of guard symbols used or expected to be used in the subcarrier spacing of 480 kHz or 960 kHz, or determines, based on the first scaling value and the first MAC CE, the number of guard symbols used or expected to be used in the subcarrier spacing of 480 kHz or 960 kHz, to avoid a scheduling conflict. According to the technical solution of this application, the first node may indicate a number of guard symbols used or expected to be used in a larger subcarrier spacing, without a need of changing a format of the MAC CE. This facilitates implementation of the solution.

In a possible implementation, the first MAC CE indicates a number of guard symbols corresponding to each of a plurality of scenarios, and the plurality of scenarios include: a plurality of receive/transmit conversion scenarios between an IAB MT and an IAB DU in an IAB node.

That the second node determines, based on the first offset value and the first MAC CE, a number of guard symbols used or expected to be used in a subcarrier spacing of 480 kHz or 960 kHz includes:
The second node obtains, by adding the number of guard symbols corresponding to each scenario to the first offset value, the number of guard symbols used or expected to be used in the subcarrier spacing of 480 kHz or 960 kHz in each scenario.

This possible implementation shows a manner of determining, by the second node with reference to the first offset value and the first MAC CE, the number of guard symbols used or expected to be used in the subcarrier spacing of 480 kHz or 960 kHz in each scenario. This facilitates implementation of the solution. The same offset value is used in the plurality of scenarios. The solution is simple and easy to implement.

In another possible implementation, the first MAC CE indicates a number of guard symbols corresponding to each of a plurality of scenarios, and the plurality of scenarios include a plurality of receive/transmit conversion scenarios between an IAB MT and an IAB DU in an IAB node. First configuration information is used to configure an offset value corresponding to each of the plurality of scenarios, and the offset value corresponding to each scenario is an offset value of the number of guard symbols that is indicated by the first MAC CE for each scenario.

That the second node determines, based on the first offset value and the first MAC CE, a number of guard symbols used or expected to be used in a subcarrier spacing of 480 kHz or 960 kHz includes:
The second node obtains, by adding the number of guard symbols that is indicated by the first MAC CE for each scenario to the offset value corresponding to each scenario, the number of guard symbols used or expected to be used in the subcarrier spacing of 480 kHz or 960 kHz in each scenario.

This possible implementation shows a manner of determining, by the second node with reference to the offset value corresponding to each scenario and the first MAC CE, the number of guard symbols used or expected to be used in the subcarrier spacing of 480 kHz or 960 kHz in each scenario. This facilitates implementation of the solution. Each of the plurality of scenarios has a corresponding offset value. This helps indicate a corresponding offset value with reference to a switching time (related to a capability of the IAB node) required by the IAB node in various scenarios, and helps indicate a more appropriate number of guard symbols for each scenario, to improve practicability of the solution.

In another possible implementation, the first MAC CE indicates a number of guard symbols corresponding to each of a plurality of scenarios, and the plurality of scenarios include a plurality of receive/transmit conversion scenarios between an IAB MT and an IAB DU in an IAB node.

That the second node determines, based on the first scaling value and the first MAC CE, a number of guard symbols used or expected to be used in a subcarrier spacing of 480 kHz or 960 kHz includes:

The second node obtains, by multiplying the first scaling value by the number of guard symbols corresponding to each scenario, the number of guard symbols used or expected to be used in the subcarrier spacing of 480 kHz or 960 kHz in each scenario.

This possible implementation shows a manner of determining, by the second node with reference to the first scaling value and the first MAC CE, the number of guard symbols used or expected to be used in the subcarrier spacing of 480 kHz or 960 kHz in each scenario, so that the solution is more abundant and comprehensive.

A seventh aspect of this application provides a guard symbol configuration method, including:

A first node sends a first MAC CE to a second node, where an SCS field in the first MAC CE indicates a first scaling value, the first scaling value is a scaling value of a number of guard symbols that is indicated by the first MAC CE, and the first scaling value and the number of guard symbols that is indicated by the first MAC CE are jointly used to determine a number of guard symbols used or expected to be used in a subcarrier spacing of 480 kHz or 960 kHz.

In the foregoing technical solution, the first node indicates, by using the first MAC CE and the first scaling value, the number of guard symbols used or expected to be used in the subcarrier spacing of 480 kHz or 960 kHz. Therefore, according to the technical solution of this application, the first node may indicate a number of guard symbols used or expected to be used in a larger subcarrier spacing, so that the second node determines the number of guard symbols used or expected to be used in the larger subcarrier spacing, to avoid a scheduling conflict, without a need of changing a format of the MAC CE. This facilitates implementation of the solution.

In a possible implementation, the method further includes:

The first node schedules the second node to receive the first MAC CE by using a carrier of the second node.

A BWP in the carrier of the second node uses the subcarrier spacing of 480 kHz or 960 kHz, or an active BWP in the carrier uses the subcarrier spacing of 480 kHz or 960 kHz.

In this possible implementation, the first node implicitly indicates, by using a carrier for scheduling the second node to receive the first MAC CE, that the first MAC CE indicates the number of guard symbols used or expected to be used in the subcarrier spacing of 480 kHz or 960 kHz.

An eighth aspect of this application provides a guard symbol configuration method, including:

A second node receives a first MAC CE from a first node. When a first condition is met, the second node determines a first scaling value based on an SCS field in the first MAC CE, and determines, based on the first scaling value and a number of guard symbols that is indicated by the first MAC CE, a number of guard symbols used or expected to be used in a subcarrier spacing of 480 kHz or 960 kHz.

The first condition includes any one of the following: at least one BWP in a carrier used by the second node to receive the first MAC CE uses the subcarrier spacing of 480 kHz or 960 kHz; or an active BWP in a carrier uses the subcarrier spacing of 480 kHz or 960 kHz.

In the foregoing technical solution, if the first condition is met, the second node may determine, based on the first MAC CE and the first scaling value, the number of guard symbols used or expected to be used in the subcarrier spacing of 480 kHz or 960 kHz. Therefore, according to the technical solution of this application, the first node may indicate a number of guard symbols used or expected to be used in a larger subcarrier spacing, so that the second node determines the number of guard symbols used or expected to be used in the larger subcarrier spacing, to avoid a scheduling conflict, without a need of changing a format of the MAC CE. This facilitates implementation of the solution.

In a possible implementation, when the first condition is not met, the method further includes:

The second node determines, based on the SCS field, that the first MAC CE indicates a number of guard symbols used or expected to be used in a first subcarrier spacing, where the first subcarrier spacing is less than or equal to 120 kHz. The second node determines, based on the first MAC CE, the number of guard symbols used or expected to be used in the first subcarrier spacing.

In this possible implementation, if the first condition is not met, the second node interprets the MAC CE in the foregoing implementation, that is, interprets the MAC CE in a conventional manner. In this way, numbers of guard symbols used or expected to be used in different sizes of subcarrier spacings are indicated.

A ninth aspect of this application provides a communication apparatus, including:

a transceiver unit, configured to: send a first medium access control control element MAC CE to a second node, where the first MAC CE indicates a number of guard symbols used in a first subcarrier spacing; and send a second MAC CE to the second node, where the first MAC CE and the second MAC CE are jointly used to determine a number of guard symbols used or expected to be used in a second subcarrier spacing.

In a possible implementation, the number of guard symbols used or expected to be used in the second subcarrier spacing is obtained by multiplying the number of guard symbols that is indicated by the first MAC CE by a first ratio and then adding a number of guard symbols that is indicated by the second MAC CE, where the first ratio is a ratio of the second subcarrier spacing to the first subcarrier spacing.

In another possible implementation, the communication apparatus is an IAB MT, and the second node is an IAB DU or a donor DU; or

the communication apparatus is an IAB DU or a donor DU, and the second node is an IAB MT.

In another possible implementation, the first subcarrier spacing is 15 kHz, 30 kHz, 60 kHz, or 120 kHz, and the second subcarrier spacing is 480 kHz or 960 kHz.

In another possible implementation, the second MAC CE includes an SCS field, and a value of the SCS field indicates the second subcarrier spacing.

In another possible implementation, the second subcarrier spacing is a subcarrier spacing used by a BWP in a carrier of the second node, the subcarrier spacing is 480 kHz or 960 kHz, and the carrier of the second node is a carrier used by the communication apparatus to schedule the second node to receive the second MAC CE;

the second subcarrier spacing is a subcarrier spacing used by an active BWP in a carrier of the second node, the subcarrier spacing is 480 kHz or 960 kHz, and the carrier of the second node is a carrier used by the communication apparatus to schedule the second node to receive the second MAC CE;

the second subcarrier spacing is a maximum subcarrier spacing of any BWP in a carrier of the second node, and the carrier of the second node is a carrier used by the communication apparatus to schedule the second node to receive the second MAC CE; or

the second subcarrier spacing is a maximum subcarrier spacing of an active BWP in a carrier of the second node, and the carrier of the second node is a carrier used by the communication apparatus to schedule the second node to receive the second MAC CE.

In another possible implementation, a reserved bit in the first MAC CE indicates that the first MAC CE is a first-type MAC CE, and a reserved bit in the second MAC CE indicates that the second MAC CE is a second-type MAC CE.

In another possible implementation, the communication apparatus further includes a processing unit.

The processing unit is configured to: map the first MAC CE to a first logical channel, and map the second MAC CE to a second logical channel, where the first MAC CE mapped to the first logical channel is a first-type MAC CE, and the second MAC CE mapped to the second logical channel is a second-type MAC CE.

The transceiver unit is specifically configured to:

send the first MAC CE to the second node through the first logical channel; and
send the second MAC CE to the second node through the second logical channel.

In another possible implementation, the number of guard symbols used or expected to be used in the second subcarrier spacing in Scenario x is
$$NmbGS_x = N * NmbGS_x^1 + NmbGS_x^2$$
, where

N is a ratio of the second subcarrier spacing to the first subcarrier spacing, $NmbGS_x^1$ is a number of guard symbols that is indicated by a field $NmbGS_x$ in the first MAC CE, $NmbGSx$ is a number of guard symbols that is indicated by a field $NmbGS_x$ in the second MAC CE, and x is an integer greater than or equal to 1 and less than or equal to 8.

Scenario x includes any one of the following:

the IAB node switches from downlink receiving of the IAB MT to downlink sending of the IAB DU;
the IAB node switches from downlink receiving of the IAB MT to uplink receiving of the IAB DU;
the IAB node switches from uplink sending of the IAB MT to downlink sending of the IAB DU;
the IAB node switches from uplink sending of the IAB MT to uplink receiving of the IAB DU;
the IAB node switches from downlink receiving of the IAB DU to downlink sending of the IAB MT;
the IAB node switches from downlink receiving of the IAB DU to uplink receiving of the IAB MT;
the IAB node switches from uplink sending of the IAB DU to downlink sending of the IAB MT; or

the IAB node switches from uplink sending of the IAB DU to uplink receiving of the IAB MT.

A tenth aspect of this application provides a communication apparatus, including:

a transceiver unit, configured to: receive a first MAC CE from a communication apparatus, where the first MAC CE indicates a number of guard symbols used in a first subcarrier spacing; and receive a second MAC CE from the communication apparatus; and
a processing unit, configured to determine, based on the first MAC CE and the second MAC CE, a number of guard symbols used or expected to be used in a second subcarrier spacing.

In a possible implementation, the processing unit is specifically configured to:
obtain, by multiplying the number of guard symbols that is indicated by the first MAC CE by a first ratio and then adding a number of guard symbols that is indicated by the second MAC CE, the number of guard symbols used or expected to be used in the second subcarrier spacing, where the first ratio is a ratio of the second subcarrier spacing to the first subcarrier spacing.
In another possible implementation, the communication apparatus is an IAB MT, and the communication apparatus is an IAB DU or a donor DU; or the communication apparatus is an IAB DU or a donor DU, and the communication apparatus is an IAB MT.
In another possible implementation, the first subcarrier spacing is 15 kHz, 30 kHz, 60 kHz, or 120 kHz, and the second subcarrier spacing is 480 kHz or 960 kHz.
In another possible implementation, the second MAC CE includes an SCS field, and a value of the SCS field indicates the second subcarrier spacing.
In another possible implementation, the processing unit is further configured to:
determine the second subcarrier spacing based on the SCS field in the second MAC CE and a second correspondence, where the second correspondence is a correspondence between the value of the SCS field in the second MAC CE and a subcarrier spacing.
In another possible implementation, the second subcarrier spacing is a subcarrier spacing used by a BWP in a carrier of the communication apparatus, the subcarrier spacing is 480 kHz or 960 kHz, and the carrier of the communication apparatus is a carrier used by the communication apparatus to schedule the communication apparatus to receive the second MAC CE;

the second subcarrier spacing is a subcarrier spacing used by an active BWP in a carrier of the communication apparatus, the subcarrier spacing is 480 kHz or 960 kHz, and the carrier of the communication apparatus is a carrier used by the communication apparatus to schedule the communication apparatus to receive the second MAC CE;
the second subcarrier spacing is a maximum subcarrier spacing of any BWP in a carrier of the communication apparatus, and the carrier of the communication apparatus is a carrier used by the communication apparatus to schedule the communication apparatus to receive the second MAC CE; or
the second subcarrier spacing is a maximum subcarrier spacing of an active BWP in a carrier of the communication apparatus, and the carrier of the communication apparatus is a carrier used by the communication apparatus to schedule the communication apparatus to receive the second MAC CE.

In another possible implementation, the processing unit is further configured to:

determine, based on a reserved bit in the first MAC CE, that the first MAC CE is a first-type MAC CE; and
determining, based on a reserved bit in the second MAC CE, that the second MAC CE is a second-type MAC CE.

In another possible implementation, the transceiver unit is specifically configured to:

receive the first MAC CE from the communication apparatus through a first logical channel; and
receive the second MAC CE from the communication apparatus through a second logical channel.

The processing unit is further configured to:
determine, through the first logical channel, that the first MAC CE is the first-type MAC CE, and determine, through the second logical channel, that the second MAC CE is the second-type MAC CE.
In another possible implementation, the number of guard symbols used or expected to be used in the second subcarrier spacing in Scenario x is $NmbGS_x = N * NmbGS_x^1 + NmbGS_x^2$ , where

N is a ratio of the second subcarrier spacing to the first subcarrier spacing, $NmbGS_x^1$ is a number of guard symbols that is indicated by a field $NmbGS_x$ in the first MAC CE, $NmbGSx$ is a number of guard symbols that is indicated by a field $NmbGS_x$ in the second MAC CE, and x is an integer greater than or equal to 1 and less than or equal to 8.

Scenario x includes any one of the following:

the IAB node switches from downlink receiving of the IAB MT to downlink sending of the IAB DU;
the IAB node switches from downlink receiving of the IAB MT to uplink receiving of the IAB DU;
the IAB node switches from uplink sending of the IAB MT to downlink sending of the IAB DU;
the IAB node switches from uplink sending of the IAB MT to uplink receiving of the IAB DU;
the IAB node switches from downlink receiving of the IAB DU to downlink sending of the IAB MT;
the IAB node switches from downlink receiving of the IAB DU to uplink receiving of the IAB MT;
the IAB node switches from uplink sending of the IAB DU to downlink sending of the IAB MT; or
the IAB node switches from uplink sending of the IAB DU to uplink receiving of the IAB MT.

An eleventh aspect of this application provides a communication apparatus, including:

a processing unit, configured to generate a first MAC CE, where the first MAC CE indicates a number of guard symbols used or expected to be used in a subcarrier spacing of 480 kHz or 960 kHz; and
a transceiver unit, configured to send the first MAC CE to a second node.

In a possible implementation, a reserved bit in the first MAC CE indicates that an SCS field in the first MAC CE indicates the subcarrier spacing of 480 kHz or 960 kHz.

In another possible implementation, the processing unit is further configured to:
schedule the second node to receive the first MAC CE by using a carrier of the second node, where at least one BWP in the carrier of the second node uses the subcarrier spacing of 480 kHz or 960 kHz, or an active BWP in the carrier uses the subcarrier spacing of 480 kHz or 960 kHz.

In another possible implementation, the communication apparatus is an IAB MT, and the second node is an IAB DU or a donor DU; or the communication apparatus is an IAB DU or a donor DU, and the second node is an IAB MT.

In another possible implementation, the processing unit is specifically configured to:

determine the number of guard symbols used or expected to be used in the subcarrier spacing of 480 kHz or 960 kHz in each of a plurality of scenarios, where the plurality of scenarios are a plurality of receive/transmit conversion scenarios between the IAB MT and the IAB DU in an IAB node; and
determine, based on a first correspondence and the number of guard symbols used or expected to be used in the subcarrier spacing of 480 kHz or 960 kHz in each scenario, a value that is of an NmbGS field in the first MAC CE and that corresponds to each scenario, where the first correspondence is a correspondence between the value of the NmbGS field and the number of guard symbols.

In another possible implementation, the transceiver unit is further configured to:
send first configuration information to the second node, where the first configuration information indicates the first correspondence.

A twelfth aspect of this application provides a communication apparatus, including:

a transceiver unit, configured to receive a first MAC CE from a first node; and
a processing unit, configured to determine, based on the first MAC CE, a number of guard symbols used or expected to be used in a subcarrier spacing of 480 kHz or 960 kHz.

In a possible implementation, the processing unit is specifically configured to:
determine, based on a first correspondence and a value that is of an NmbGS field in the first MAC CE and that corresponds to each of a plurality of scenarios, the number of guard symbols used or expected to be used in the subcarrier spacing of 480 kHz or 960 kHz in each scenario, where the first correspondence is a correspondence between the value of the NmbGS field and the number of guard symbols, and the plurality of scenarios are a plurality of receive/transmit conversion scenarios between an IAB MT and an IAB DU in the IAB node.

In another possible implementation, the processing unit is further configured to:
when a first condition is met, determine that the first MAC CE indicates the number of guard symbols used or expected to be used in the subcarrier spacing of 480 kHz or 960 kHz.

The first condition includes any one of the following:

a reserved bit in the first MAC CE indicates that an SCS field in the first MAC CE indicates the subcarrier spacing of 480 kHz or the subcarrier spacing of 960 kHz;
at least one BWP in a carrier used by the communication apparatus to receive the first MAC CE uses the subcarrier spacing of 480 kHz or 960 kHz; or
an active BWP in a carrier used by the communication apparatus to receive the first MAC CE uses the subcarrier spacing of 480 kHz or 960 kHz.

In another possible implementation, the first node is an IAB MT, and the communication apparatus is an IAB DU or a donor DU; or the first node is an IAB DU or a donor DU, and the communication apparatus is an IAB MT.

In another possible implementation, the transceiver unit is further configured to:
receive first configuration information from the first node, where the first configuration information indicates the first correspondence.

A thirteenth aspect of this application provides a communication apparatus, including:
a transceiver unit, configured to: send first indication information to a second node, where the first indication information indicates a first offset value or a first scaling value, the first offset value is an offset value of a number of guard symbols, and the first scaling value is a scaling value of the number of guard symbols; and send a first MAC CE to the second node, where the first MAC CE indicates the number of guard symbols, and the first MAC CE and the first offset value are jointly used to determine a number of guard symbols used or expected to be used in a subcarrier spacing of 480 kHz or 960 kHz, or the first MAC CE and the first scaling value are jointly used to determine a number of guard symbols used or expected to be used in a subcarrier spacing of 480 kHz or 960 kHz.

In a possible implementation, the first MAC CE indicates a number of guard symbols corresponding to each of a plurality of scenarios, and the plurality of scenarios include a plurality of receive/transmit conversion scenarios between an IAB MT and an IAB DU in an IAB node.

The number of guard symbols used or expected to be used in the subcarrier spacing of 480 kHz or 960 kHz in each of the plurality of scenarios is a number of guard symbols that corresponds to each scenario and that is indicated by the first MAC CE plus the first offset value.

In another possible implementation, the first MAC CE indicates a number of guard symbols corresponding to each of a plurality of scenarios, and the plurality of scenarios include a plurality of receive/transmit conversion scenarios between an IAB MT and an IAB DU in an IAB node.

The first indication information is used to configure an offset value corresponding to each of the plurality of scenarios, and the offset value corresponding to each scenario is an offset value of the number of guard symbols that is indicated by the first MAC CE for each scenario.

In another possible implementation, the first MAC CE indicates a number of guard symbols corresponding to each of a plurality of scenarios, and the plurality of scenarios include a plurality of receive/transmit conversion scenarios between an IAB MT and an IAB DU in an IAB node.

The number of guard symbols used or expected to be used in the subcarrier spacing of 480 kHz or 960 kHz in each of the plurality of scenarios is obtained by multiplying a number of guard symbols that corresponds to each scenario and that is indicated by the first MAC CE by the first scaling value.

In another possible implementation, the communication apparatus is an IAB MT, and the second node is an IAB DU or a donor DU; or the communication apparatus is an IAB DU or a donor DU, and the second node is an IAB MT.

In another possible implementation, the communication apparatus further includes a processing unit.

The processing unit is configured to schedule the second node to receive the first MAC CE by using a carrier of the second node, where at least one BWP in the carrier of the second node uses the subcarrier spacing of 480 kHz or 960 kHz, or an active BWP in the carrier uses the subcarrier spacing of 480 kHz or 960 kHz.

A fourteenth aspect of this application provides a communication apparatus, including:

a transceiver unit, configured to receive first indication information from a first node, where the first indication information indicates a first offset value or a first scaling value, the first offset value is an offset value of a number of guard symbols, and the first scaling value is a scaling value of the number of guard symbols; and receive a first MAC CE from the first node; and
a processing unit, configured to: determine, based on the first offset value and the first MAC CE, a number of guard symbols used or expected to be used in a subcarrier spacing of 480 kHz or 960 kHz, or determine, based on the first scaling value and the first MAC CE, a number of guard symbols used or expected to be used in a subcarrier spacing of 480 kHz or 960 kHz.

In a possible implementation, the first MAC CE indicates a number of guard symbols corresponding to each of a plurality of scenarios, and the plurality of scenarios include: a plurality of receive/transmit conversion scenarios between an IAB MT and an IAB DU in an IAB node.

The processing unit is specifically configured to:

obtain, by adding the number of guard symbols corresponding to each scenario to the first offset value, the number of guard symbols used or expected to be used in the subcarrier spacing of 480 kHz or 960 kHz in each scenario.

In another possible implementation, the first MAC CE indicates a number of guard symbols corresponding to each of a plurality of scenarios, and the plurality of scenarios include a plurality of receive/transmit conversion scenarios between an IAB MT and an IAB DU in an IAB node. First configuration information is used to configure an offset value corresponding to each of the plurality of scenarios, and the offset value corresponding to each scenario is an offset value of the number of guard symbols that is indicated by the first MAC CE for each scenario.

The processing unit is specifically configured to:

obtain, by adding the number of guard symbols that is indicated by the first MAC CE for each scenario to the offset value corresponding to each scenario, the number of guard symbols used or expected to be used in the subcarrier spacing of 480 kHz or 960 kHz in each scenario.

In another possible implementation, the first MAC CE indicates a number of guard symbols corresponding to each of a plurality of scenarios, and the plurality of scenarios include a plurality of receive/transmit conversion scenarios between an IAB MT and an IAB DU in an IAB node.

The processing unit is specifically configured to:

obtain, by multiplying the first scaling value by the number of guard symbols corresponding to each scenario, the number of guard symbols used or expected to be used in the subcarrier spacing of 480 kHz or 960 kHz in each scenario.

A fifteenth aspect of this application provides a communication apparatus, including:

a transceiver unit, configured to send a first MAC CE to a second node, where an SCS field in the first MAC CE indicates a first scaling value, the first scaling value is a scaling value of a number of guard symbols that is indicated by the first MAC CE, and the first scaling value and the number of guard symbols that is indicated by the first MAC CE are jointly used to determine a number of guard symbols used or expected to be used in a subcarrier spacing of 480 kHz or 960 kHz.

In a possible implementation, the communication apparatus further includes a processing unit.

The processing unit is configured to:

schedule the second node to receive the first MAC CE by using a carrier of the second node.

A BWP in the carrier uses the subcarrier spacing of 480 kHz or 960 kHz, or an active BWP in the carrier uses the subcarrier spacing of 480 kHz or 960 kHz.

A sixteenth aspect of this application provides a communication apparatus, including:

a transceiver unit, configured to receive a first MAC CE from a first node; and

a processing unit, configured to: when a first condition is met, determine a first scaling value based on an SCS field in the first MAC CE, and determine, based on the first scaling value and a number of guard symbols that is indicated by the first MAC CE, a number of guard symbols used or expected to be used in a subcarrier spacing of 480 kHz or 960 kHz.

The first condition includes any one of the following: at least one BWP in a carrier used by the communication apparatus to receive the first MAC CE uses the subcarrier spacing of 480 kHz or 960 kHz; or an active BWP in a carrier uses the subcarrier spacing of 480 kHz or 960 kHz.

In a possible implementation, when the first condition is not met, the processing unit is further configured to: determine, based on the SCS field, that the first MAC CE indicates a number of guard symbols used or expected to be used in a first subcarrier spacing, where the first subcarrier spacing is less than or equal to 120 kHz. The communication apparatus determines, based on the first MAC CE, the number of guard symbols used or expected to be used in the first subcarrier spacing.

A seventeenth aspect of this application provides a communication apparatus, where the communication apparatus includes a processor and a memory. The memory stores a computer program or computer instructions, and the processor is configured to invoke and run the computer program or the computer instructions stored in the memory, to enable the processor to implement any one of the implementations of the first aspect, the third aspect, the fifth aspect, or the seventh aspect.

Optionally, the communication apparatus further includes a transceiver, and the processor is configured to control the transceiver to receive and send a signal.

An eighteenth aspect of this application provides a communication apparatus, where the communication apparatus includes a processor and a memory. The memory stores a computer program or computer instructions, and the processor is configured to invoke and run the computer program or the computer instructions stored in the memory, to enable the processor to implement any one of the implementations of the second aspect, the fourth aspect, the sixth aspect, or the eighth aspect.

Optionally, the communication apparatus further includes a transceiver, and the processor is configured to control the transceiver to receive and send a signal.

A nineteenth aspect of this application provides a communication apparatus, where the communication apparatus includes a processor. The processor is configured to invoke a computer program or computer instructions in a memory, to enable the processor to implement any one of the implementations of the first aspect, the third aspect, the fifth aspect, and the seventh aspect.

Optionally, the communication apparatus further includes a transceiver, and the processor is configured to control the transceiver to receive and send a signal.

A twentieth aspect of this application provides a communication apparatus, where the communication apparatus includes a processor. The processor is configured to invoke a computer program or computer instructions in a memory, to enable the processor to implement any one of the implementations of the second aspect, the fourth aspect, the sixth aspect, and the eighth aspect.

Optionally, the communication apparatus further includes a transceiver, and the processor is configured to control the transceiver to receive and send a signal.

A twenty-first aspect of this application provides a communication apparatus, where the communication apparatus includes a processor. The processor is configured to perform any one of the implementations of the first aspect, the third aspect, the fifth aspect, and the seventh aspect.

Optionally, the communication apparatus further includes a transceiver, and the processor is configured to control the transceiver to receive and send a signal.

A twenty-second aspect of this application provides a communication apparatus, where the communication apparatus includes a processor. The processor is configured to perform any one of the implementations of the second aspect, the fourth aspect, the sixth aspect, and the eighth aspect.

Optionally, the communication apparatus further includes a transceiver, and the processor is configured to control the transceiver to receive and send a signal.

A twenty-third aspect of this application provides a computer program product including instructions. When the computer program product runs on a computer, the computer is enabled to perform any one of the implementations of the first aspect to the eighth aspect.

A twenty-fourth aspect of this application provides a computer-readable storage medium including a computer program or instructions. When the instructions are run on a computer, the computer is enabled to perform any one of the implementations of the first aspect to the eighth aspect.

A twenty-fifth aspect of this application provides a chip apparatus, including a processor, configured to invoke a computer program or computer instructions in a memory, to enable the processor to perform any one of the implementations of the first aspect to the eighth aspect.

Optionally, the processor is coupled to the memory through an interface.

A twenty-fourth aspect of this application provides a communication system. The communication system includes the first node according to the first aspect and the second node according to the second aspect; or the communication system includes the first node according to the third aspect and the second node according to the fourth aspect; or the communication system includes the first node according to the fifth aspect and the second node according to the sixth aspect; or the communication system includes the first node according to the seventh aspect and the second node according to the eighth aspect.

It can be learned from the foregoing technical solution that the solution of this application has the following advantages.

It can be learned from the foregoing technical solution that the first node sends the first MAC CE to the second node, where the first MAC CE indicates the number of guard symbols used in the first subcarrier spacing; and the first node sends the second MAC CE to the second node, where the first MAC CE and the second MAC CE are jointly used to determine the number of guard symbols used or expected to be used in the second subcarrier spacing. It can be learned that, in the technical solution of this application, the first node indicates, by using the two MAC CEs, the number of guard symbols used or expected to be used in the second subcarrier spacing. Therefore, according to the technical solution of this application, the first node may indicate a number of guard symbols used or expected to be used in a larger subcarrier spacing.

## BRIEF DESCRIPTION OF DRAWINGS

FIG. 1A is a schematic diagram of a communication system according to an embodiment of this application;
FIG. 1B is a schematic diagram of a structure of an IAB node according to an embodiment of this application;

FIG. 2 is a schematic diagram of a structure of a MAC CE according to an embodiment of this application;

FIG. 3 is a schematic diagram of an embodiment of a guard symbol configuration method according to an embodiment of this application;

FIG. 4 is a schematic diagram of another embodiment of a guard symbol configuration method according to an embodiment of this application;

FIG. 5 is a schematic diagram of another embodiment of a guard symbol configuration method according to an embodiment of this application;

FIG. 6 is a schematic diagram of another embodiment of a guard symbol configuration method according to an embodiment of this application;

FIG. 7 is a schematic diagram of a structure of a communication apparatus according to an embodiment of this application;

FIG. 8 is another schematic diagram of a structure of a communication apparatus according to an embodiment of this application;

FIG. 9 is another schematic diagram of a structure of a communication apparatus according to an embodiment of this application;

FIG. 10 is another schematic diagram of a structure of a communication apparatus according to an embodiment of this application; and

FIG. 11 is another schematic diagram of a structure of a communication apparatus according to an embodiment of this application.

## DESCRIPTION OF EMBODIMENTS

Embodiments of this application provide a guard symbol configuration method and a communication apparatus, so that a first node indicates a number of guard symbols used or expected to be used in a larger subcarrier spacing.

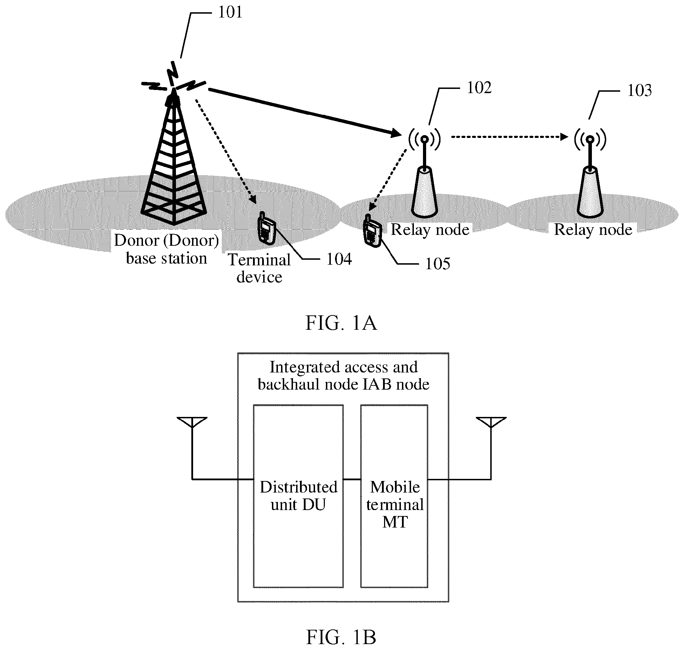

FIG. 1A is a schematic diagram of a communication system according to an embodiment of this application. Refer to FIG. 1A. The communication system is an IAB system, and the IAB system includes at least one base station 101, a relay node 102, a relay node 103, a relay node 104, a terminal device 104, and a terminal device 105.

Generally, the base station 101 is referred to as a donor base station, or may be referred to as a donor node, and the terminal device is also referred to as a terminal. Generally, the relay node may also be referred to as an IAB node. The base station includes but is not limited to: an eNB, a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a new radio base station (for example, a gNB), a transmission reception point TRP, or a transmission point TP.

The relay node 103 is an upper-level node of the relay node 102, and the relay node 102 is a lower-level node of the base station 101. Usually, a lower-level node may be considered as a terminal of an upper-level node.

In FIG. 1A, the donor base station is configured to access a core network. Alternatively, the donor base station serves as an anchor base station of a radio access network, and a network is accessed via the anchor base station. The anchor base station is responsible for processing data at a packet data convergence protocol (packet data convergence protocol, PDCP) layer, receiving data from the core network and forwarding the data to the relay node, or receiving data from the relay node and forwarding the data to the core network.

In this application, the IAB node is divided into an IAB mobile terminal (mobile terminal, MT) and an IAB distributed unit (distributed unit, DU) in terms of functions. Specifically, refer to FIG. 1B. The IAB MT means that the IAB node accesses an upper-level node as a terminal device. The IAB DU means that the IAB serves as a base station distributed unit and provides an access service for UE and another lower-level node. Generally, the IAB MT communicates with an upper-level node through a backhaul link, the IAB DU communicates with a lower-level node through a backhaul link, and the IAB DU communicates with a terminal device through an access link.

Both the MT and the DU of the IAB node shown in FIG. 1B have complete transceiver modules, and there is an interface between the MT and the DU. However, the MT and the DU are logical modules. In actual application, the MT and the DU may share some submodules. For example, the MT and the DU share a transceiver antenna, a baseband processing module, and the like. Alternatively, the MT and the DU may share hardware. Specific implementations of the MT and the DU are not limited in this application.

It should be understood that the term "and/or" in this specification describes only an association relationship for describing associated objects and represents that three relationships may exist. For example, A and/or B may represent the following three cases: Only A exists, both A and B exist, and only B exists.

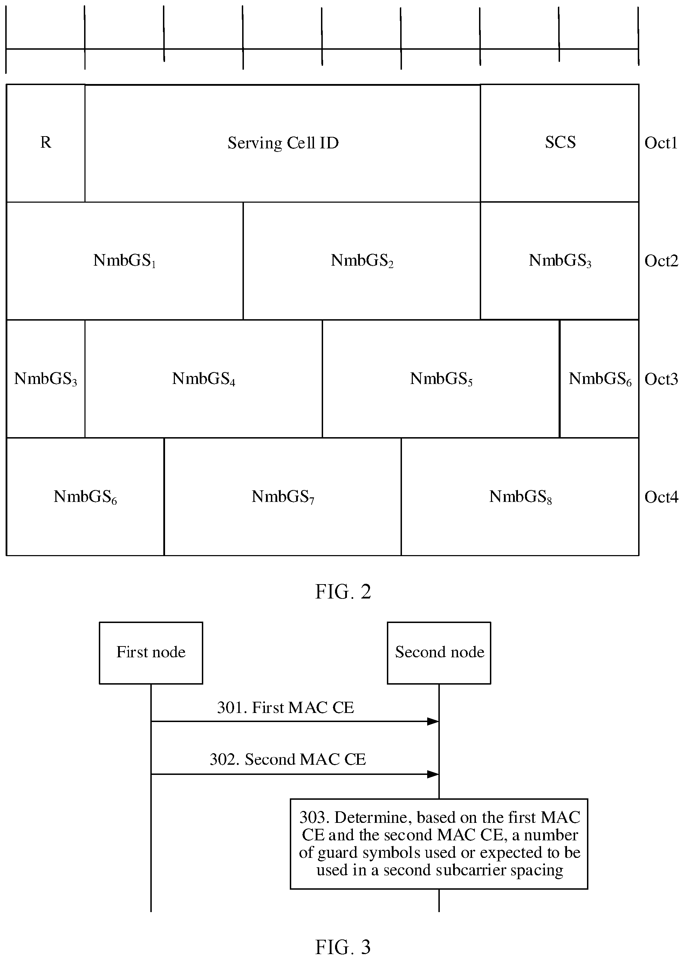

The following first describes a format of a MAC CE with reference to FIG. 2.

FIG. 2 is a schematic diagram of a structure of a MAC CE according to an embodiment of this application. Refer to FIG. 2. The MAC CE includes a reserved bit R, a serving cell identifier (serving cell identifier, serving cell ID), an SCS field, and an NmbGS field.

The reserved bit R represents a reserved bit field, a length of the reserved bit is one bit, and the reserved bit is not used currently.

The serving cell identifier indicates a specific cell resource on which a guard symbol indicated by the MAC CE is reserved and that is of an IAB MT. A cell in the IAB MT represents a frequency-domain carrier resource of the IAB MT. When carrier aggregation is enabled for the IAB MT, the IAB MT has a plurality of serving cells.

The SCS field indicates that a value of the NmbGS field in the MAC CE is a number of guard symbols in a specific subcarrier spacing. For example, the following describes a correspondence between a value of the SCS field and a subcarrier spacing with reference to Table 1.

**Table 1**

| Subcarrier spacing (subcarrier spacing) | Value of an SCS field |
|---|---|
| 15 kHz | 00 |
| 30 kHz | 01 |
| 60 kHz | 10 |
| 120 kHz | 11 |

It can be learned from Table 1 that, for example, if the value of the SCS field is 00, it indicates that the MAC CE indicates a number of guard symbols that need to be reserved in a subcarrier spacing of 15 kHz.

The MAC CE includes eight NmbGS fields, and each NmbGS field corresponds to one scenario, and indicates a number of guard symbols that need to be reserved in a subcarrier spacing indicated by the SCS field in the corresponding scenario. A length of each NmbGS field is three bits. The following describes NmbGS fields corresponding to different scenarios with reference to Table 2.

**Table 2**

| Switching scenario (switching scenario) | | Field indicating a number of guard symbols in a MAC CE |
|---|---|---|
| Operation of switching | An IAB node switches from downlink | $NmbGS_1$ |
| from an IAB MT to an IAB DU | receiving of the IAB MT to downlink sending of the IAB DU (DL Rx to DL Tx for short). | |
| | The IAB node switches from downlink receiving of the IAB MT to uplink receiving of the IAB DU (DL Rx to UL Rx for short). | $NmbGS_2$ |
| | The IAB node switches from uplink sending of the IAB MT to downlink sending of the IAB DU (UL Tx to DL Tx for short). | $NmbGS_3$ |
| | The IAB node switches from uplink sending of the IAB MT to uplink receiving of the IAB DU (UL Tx to UL Rx for short). | $NmbGS_4$ |

(continued)

| Switching scenario (switching scenario) | | Field indicating a number of guard symbols in a MAC CE |
|---|---|---|
| Operation of switching from the IAB DU to the IAB MT | The IAB node switches from downlink receiving of the IAB DU to downlink sending of the IAB MT (DL Rx to DL Tx for short). | $NmbGS_5$ |
| | The IAB node switches from downlink receiving of the IAB DU to uplink receiving of the IAB MT (DL Rx to UL Rx for short). | $NmbGS_6$ |
| | The IAB node switches from uplink sending of the IAB DU to downlink sending of the IAB MT (UL Tx to DL Tx for short). | $NmbGS_7$ |
| | The IAB node switches from uplink sending of the IAB DU to uplink receiving of the IAB MT (UL Tx to UL Rx for short). | $NmbGS_8$, |

It can be learned from Table 2 that the MAC CE has corresponding NmbGS fields for different scenarios, and the value of the NmbGS field indicates a number of guard symbols that need to be reserved in a subcarrier spacing indicated by the SCS field in a corresponding scenario. For example, the SCS field indicates 15 kHz, and $NmbGS_1$ in the MAC CE indicates a number of guard symbols that need to be reserved in the subcarrier spacing of 15 kHz in the DL Rx to DL Tx scenario.

It should be noted that the MAC CE may be a provided guard symbol MAC CE (provided guard symbol MAC CE), and is used by an upper-level node to indicate, to a lower-level node, a number of guard symbols that need to be reserved. Alternatively, the MAC CE may be a desired guard symbol MAC CE (desired guard symbol MAC CE), and is used by a lower-level node to indicate, to an upper-level node, a number of guard symbols that the lower-level node wants to reserve. In a current communication standard protocol, the guard symbol is reserved on a time domain resource of the IAB MT.

The NR-17 standard plans to discuss use of a spectrum above 52.6 GHz. To resist phase noise impact and support higher bandwidth, a larger subcarrier spacing needs to be used for the spectrum above 52.6 GHz, for example, a subcarrier spacing of 480 kHz or 960 kHz. However, based on a signaling format of the MAC CE, how does the first node indicate a number of guard symbols that need to be reserved in the larger subcarrier spacing?

Specifically, it can be learned from the related descriptions of FIG. 2 that a length of the SCS field in the MAC CE is two bits, and it is difficult to further indicate the subcarrier spacings of 480 kHz and 960 kHz. In addition, when an absolute time of working switching between the IAB MT and the IAB DU is fixed, for the subcarrier spacing of 480 kHz and 960 kHz, the IAB MT needs more guard symbols (where a larger subcarrier spacing indicates a shorter length of one symbol, and therefore, a larger subcarrier spacing needs more guard symbols to be reserved). It can be learned from the related descriptions of FIG. 2 that a length of the NmbGS field is three bits, and a maximum number of 0 to 7 guard symbols can be indicated. An indication range of the NmbGS field is limited, and a number of more guard symbols cannot be indicated for a larger subcarrier spacing. In view of this, this application provides a guard configuration method, so that the first node indicates the number of guard symbols that need to be reserved in the larger subcarrier spacing. For details, refer to related descriptions in the following embodiments.

The technical solution of this application is described below with reference to specific embodiments.

FIG. 3 is a schematic diagram of an embodiment of a guard symbol configuration method according to an embodiment of this application. Refer to FIG. 3. The guard symbol configuration method includes the following steps.

301. A first node sends a first MAC CE to a second node. Correspondingly, the second node receives the first MAC CE from the first node.

The first MAC CE indicates a number of guard symbols used or expected to be used in a first subcarrier spacing.

For example, as shown in FIG. 2, the value of the SCS field in the first MAC CE is 11. It can be learned from Table 1 that the number of guard symbols that is indicated by the first MAC CE is a number of guard symbols used or expected to be used in a subcarrier spacing of 120 kHz.

The following describes some possible implementations of a relationship between the first node and the second node.

Implementation 1: The first node is a lower-level node of the second node, the first node is an IAB MT, and the second node is an IAB DU or a donor DU.

The first node is a first relay node, and the IAB MT may be understood as an MT unit of the first relay node.

The second node may be a second relay node, and the IAB DU may be understood as a DU unit of the second relay node. Alternatively, the second node may be a donor base station, and the donor DU may be understood as a DU unit in the donor base station.

In Implementation 1, the first MAC CE indicates the number of guard symbols expected to be used in the first subcarrier spacing. To be specific, the IAB MT indicates, to the upper-level node (the IAB DU or the donor DU), a number of guard symbols that the IAB MT expects to reserve in the first subcarrier spacing.

Implementation 2: The first node is an upper-level node of the second node, the first node is an IAB DU or a donor DU, and the second node is an IAB MT.

The first node is a third relay node, and the IAB DU may be understood as a DU unit of the third relay node. Alternatively, the second node is a donor base station, and the donor DU may be understood as a DU unit in the donor base station. The second node is a fourth relay node, and the IAB MT may be understood as an MT unit of the fourth relay node.

In Implementation 2, the first MAC CE indicates the number of guard symbols used in the first subcarrier spacing. To be specific, the upper-level node indicates, to the IAB MT, a number of guard symbols that the IAB MT needs to reserve in the first subcarrier spacing.

In some implementations, the first subcarrier spacing is 15 kHz, 30 kHz, 60 kHz, or 120 kHz.

302. The first node sends a second MAC CE to the second node. Correspondingly, the second node receives the second MAC CE from the first node.

The second MAC CE indicates a number of guard symbols, and the first MAC CE and the second MAC CE are jointly used to determine a number of guard symbols used or expected to be used in a second subcarrier spacing.

Optionally, the second subcarrier spacing is greater than the second subcarrier spacing, and the second subcarrier spacing may be an integer multiple relationship of the first subcarrier spacing. For example, the first subcarrier spacing is 15 kHz, 30 kHz, 60 kHz, or 120 kHz, and the second subcarrier spacing is 480 kHz, 960 kHz, or 1.92 MHz (megahertz).

In some implementations, the number of guard symbols used or expected to be used in the second subcarrier spacing is obtained by multiplying the number of guard symbols that is indicated by the first MAC CE by a first ratio and then adding the number of guard symbols that is indicated by the second MAC CE.

The first ratio is a ratio of the second subcarrier spacing to the first subcarrier spacing.

Specifically, as shown in FIG. 2, the MAC CE includes eight NmbGS fields, and each NmbGS field corresponds to one scenario, and indicates a number of guard symbols needed in the corresponding scenario. It can be learned from the foregoing calculation manner of the number of guard symbols used or expected to be used in the second subcarrier spacing that the number of guard symbols used or expected to be used in the second subcarrier spacing in Scenario x is $NmbGS_x = N * NmbGS_x^1 + NmbGS_x^2$. $NmbGS_x^1$ is a number of guard symbols that is indicated by a field

$NmbGS_x$ in the first MAC CE, $NmbGS_x^2$ is a number of guard symbols that is indicated by a field $NmbGS_x$ in the second MAC CE, and x is an integer greater than or equal to 1 and less than or equal to 8.

N is the ratio of the second subcarrier spacing to the first subcarrier spacing.

Scenario x includes any one of the following:

the IAB node switches from downlink receiving of the IAB MT to downlink sending of the IAB DU;
the IAB node switches from downlink receiving of the IAB MT to uplink receiving of the IAB DU;
the IAB node switches from uplink sending of the IAB MT to downlink sending of the IAB DU;
the IAB node switches from uplink sending of the IAB MT to uplink receiving of the IAB DU;
the IAB node switches from downlink receiving of the IAB DU to downlink sending of the IAB MT;
the IAB node switches from downlink receiving of the IAB DU to uplink receiving of the IAB MT;
the IAB node switches from uplink sending of the IAB DU to downlink sending of the IAB MT; or
the IAB node switches from uplink sending of the IAB DU to uplink receiving of the IAB MT.

For example, if the first subcarrier spacing is 120 kHz, and the second subcarrier spacing is 480 kHz, N is 4. Therefore, the number of guard symbols used or expected to be used in the subcarrier spacing of 480 kHz in Scenario x is $NmbGS_x = 4 * NmbGS_x^1 + NmbGS_x^2$.

For example, if the first subcarrier spacing is 120 kHz, and the second subcarrier spacing is 960 kHz, N=8. Therefore, a number of guard symbols used or expected to be used in the subcarrier spacing of 960 kHz in Scenario x is $$NmbGS_x = 8 * NmbGS_x^1 + NmbGS_x^2$$ .

For example, the first subcarrier spacing is 120 kHz, and the second subcarrier spacing is 480 kHz. The first MAC CE indicates two guard symbols, and the second MAC CE indicates two guard symbols. Therefore, it can be learned that N=480 kHz/120 kHz=4. The number of guard symbols used or expected to be used in the second subcarrier spacing is 4*2+2=10.

The following describes some possible implementations in which the first node indicates the second subcarrier spacing to the second node.

Implementation 1: The second MAC CE includes an SCS field, and a value of the SCS field indicates the second subcarrier spacing.

In this implementation, the first node additionally sends the second MAC CE to the second node, and the value of the SCS field in the second MAC CE indicates a larger subcarrier spacing. For example, Table 3 shows a correspondence between the value of the SCS field in the second MAC CE and the subcarrier spacing.

**Table 3**

| Subcarrier spacing (subcarrier spacing) | Value of an SCS field |
|---|---|
| 480 kHz | 00 |
| 960 kHz | 01 |

For example, as shown in Table 3, when the value of the SCS field in the second MAC CE is "00", it indicates that the second subcarrier spacing is 480 kHz. When the value of the SCS field in the second MAC CAis "01 ", it indicates that the second subcarrier spacing is 960 kHz.

It should be noted that Table 3 shows merely an example of the correspondence between the value of the SCS field and the subcarrier spacing. In actual application, alternatively, when the value of the SCS field is "00", it may indicate that the second subcarrier spacing is 960 kHz; and when the value of the SCS field is "01 ", it may indicate that the second subcarrier spacing is 480 kHz. Alternatively, the SCS field uses another value. For example, when the SCS field is "10", it indicates that the second subcarrier spacing is 480 kHz; and when the SCS field is "11", it indicates that the second subcarrier spacing is 960 kHz. This is not specifically limited in this application.

It should be noted that, optionally, a length of the SCS field may be two bits shown in Table 3, or may be another length. This is not specifically limited in this application. For example, the length of the SCS field is one bit. When the value of the SCS field is "0", it indicates that the second subcarrier spacing is 480 kHz. When the value of the SCS field is " 1", it indicates that the second subcarrier spacing is 960 kHz.

Implementation 2: The first node indicates the second subcarrier spacing by using a carrier for scheduling the second node to receive the second MAC CE. The second subcarrier spacing is any one of the following:

a subcarrier spacing used by at least one BWP in the carrier of the second node, where the subcarrier spacing is 480 kHz or 960 kHz;
a subcarrier spacing used by an active BWP in the carrier of the second node, where the subcarrier spacing is 480 kHz or 960 kHz;
a maximum subcarrier spacing of any BWP in the carrier of the second node; or
a maximum subcarrier spacing of an active BWP in the carrier of the second node.

The first node is an upper-level node of the second node, the first node is an IAB DU or a donor DU, and the second node is an IAB MT. The maximum subcarrier spacing of any BWP in the carrier of the second node is 480 kHz or 960 kHz. The maximum subcarrier spacing of the active BWP in the carrier of the second node is 480 kHz or 960 kHz.

Based on Implementation 2, 302 specifically includes: The first node sends the second MAC CE to the second node. Correspondingly, the second node receives the second MAC CE from the first node by using the carrier of the second node.

The Implementation 2 implicitly indicates the second subcarrier spacing. After receiving the second MAC CE by using the carrier of the second node, the second node may determine the second subcarrier spacing based on the BWP or the active BWP in the carrier of the second node.

Optionally, the first MAC CE is a first-type MAC CE, and the second MAC CE is a second-type MAC CE.

The first-type MAC CE is a conventional MAC CE, that is, a conventional MAC CE in a current communication system. The second-type MAC CE is a MAC CE additionally indicated by the first node. The first node additionally indicates the second MAC CE, so that the second node determines, by jointly using the first MAC CE and the second MAC CE, the number of guard symbols used or expected to be used in the second subcarrier spacing. It can be learned from the related description shown in FIG. 2 that the SCS field in the MAC CE is of only two bits, and cannot indicate a larger subcarrier spacing. The length of the NmbGS field in the MAC CE is three bits, and a maximum of seven symbols can be indicated. However, for a larger subcarrier spacing, more guard symbols are needed. Therefore, in this application, the first node indicates, by jointly using the first MAC CE and the second MAC CE, the number of guard symbols used or expected to be used in the second subcarrier spacing. Therefore, a problem that a number of guard symbols used or expected to be used in a larger subcarrier spacing cannot be indicated due to a signaling format of the MAC CE is resolved.

Optionally, for a larger subcarrier spacing, a value range of the NmbGS field in the second MAC CE may be redefined. For example, Table 4 shows a relationship between the value of the NmbGS field in the second MAC CE and the number of guard symbols.

**Table 4**

| Value of a NmbGS field | Number of guard symbols that is indicated by a second MAC CE when a second subcarrier spacing is 480 kHz | Number of guard symbols that is indicated by a second MAC CE when a second subcarrier spacing is 960 kHz |
|---|---|---|
| 000 | 0 | 0 |
| 001 | 1 | 1 |
| 010 | 2 | 2 |
| 011 | 3 | 3 |
| 100 | Reserved (reserved) | 4 |
| 101 | Reserved | 5 |
| 110 | Reserved | 6 |
| 111 | Reserved | 7 |

It can be learned that, the value range of the NmbGS field in the second MAC CE in Table 4 is 0 to 7, and the number of guard symbols that is indicated by the value of the NmbGS field in the second MAC CE may be defined, to support a number of more guard symbols that need to be reserved in a larger subcarrier spacing.

The following describes several possible implementations in which the second node distinguishes between the first MAC CE and the second MAC CE.

Implementation 1: A reserved bit in the first MAC CE indicates that the first MAC CE is the first-type MAC CE, and a reserved bit in the second MAC CE indicates that the second MAC CE is the second-type MAC CE.

For example, as shown in FIG. 2, if the reserved bit R in the first MAC CE is "0", the first MAC CE is the first-type MAC CE. If the reserved bit R in the second MAC CE is "1", the second MAC CE is the second-type MAC CE. Alternatively, if the reserved bit R in the first MAC CE is "1", the first MAC CE is the first-type MAC CE. If the reserved bit R in the second MAC CE is "0", the second MAC CE is the second-type MAC CE.

It should be noted that a length of the reserved bit may be one bit, or may be another length. This is not specifically limited in this application. For example, if the reserved bit in the first MAC CE is "01", the first MAC CE is the first-type MAC CE. If the reserved bit in the second MAC CE is "10", the second MAC CE is the second-type MAC CE.

Implementation 2: The first node maps the first MAC CE to a first logical channel, and maps the second MAC CE to a second logical channel. The first MAC CE mapped to the first logical channel is the first-type MAC CE, and the second MAC CE mapped to the second logical channel is the second-type MAC CE.

Based on the foregoing Implementation 2, 301 specifically includes: The first node sends the first MAC CE to the second node through the first logical channel. Correspondingly, the second node receives the first MAC CE from the first node through the first logical channel. 302 specifically includes: The first node sends the second MAC CE to the second node through the second logical channel. Correspondingly, the second node receives the second MAC CE from the first node through the second logical channel. The second node may determine, through the first logical channel, that the first MAC CE is the first-type MAC CE, and determine, through the second logical channel, that the second MAC CE is the second-type MAC CE.

Implementation 3: The second node may determine, based on a specification of a communication protocol, that the received first MAC CE is the first-type MAC CE, and the received second MAC CE is the second-type MAC CE.

The communication protocol specifies that, when the second node works in a subcarrier spacing greater than 120 kHz, the two MAC CEs are jointly used to determine the number of guard symbols used or expected to be used in the second subcarrier spacing.

303. The second node determines, based on the first MAC CE and the second MAC CE, the number of guard symbols used or expected to be used in the second subcarrier spacing.

Specifically, the second node determines the second carrier spacing. Then, the second node determines, based on the first MAC CE and the second MAC CE, the number of guard symbols used or expected to be used in the second subcarrier spacing.

The following describes two possible implementations in which the second node determines the second subcarrier spacing.

1. Based on Implementation 1 in which the first node indicates the second subcarrier spacing to the second node in 302, optionally, the second node determines the second subcarrier spacing based on a second correspondence and the SCS field in the second MAC CE.

The second correspondence is a correspondence between the value of the SCS field in the second MAC CE and the subcarrier spacing.

For example, if the second node determines that the value of the SCS field in the second MAC CE is "00", the second node may determine, with reference to Table 3, that the second subcarrier spacing is 480 kHz.

2. Based on Implementation 2 in which the first node indicates the second subcarrier spacing to the second node in 302, optionally, the second node determines the second subcarrier spacing by using a carrier used by the second node to receive the second MAC CE.

For example, if at least one BWP in the carrier of the second node uses a subcarrier spacing of 480 kHz or 960 kHz, the second node may determine that the second subcarrier spacing is the subcarrier spacing of 480 kHz or 960 kHz used by the at least one BWP.

For example, if the active BWP in the carrier of the second node uses a subcarrier spacing of 480 kHz or 960 kHz, the second node may determine that the second subcarrier spacing is the subcarrier spacing of 480 kHz or 960 kHz used by the active BWP.

For example, the second node may determine that the second subcarrier spacing is the maximum subcarrier spacing of any BWP in the carrier of the second node. The maximum subcarrier spacing is 480 kHz or 960 kHz.

For example, the second node may determine that the second subcarrier spacing is a maximum subcarrier spacing of the active BWP in the carrier of the second node. The maximum subcarrier spacing is 480 kHz or 960 kHz.

Optionally, the second node may determine the first subcarrier spacing based on the first MAC CE and a third correspondence. The third correspondence is a correspondence between the value of the SCS field in the first MAC CE and the subcarrier spacing.

For example, the third correspondence may be represented by using the foregoing Table 1. If the second node determines that the value of the SCS field in the first MAC CE is "11", the second node may determine, with reference to Table 1, that the first subcarrier spacing is 120 kHz.

It should be noted that Table 1 shows merely an example of the correspondence between the value of the SCS field and the subcarrier spacing. In actual application, the correspondence between the value of the SCS field and the subcarrier spacing may alternatively include: when the value of the SCS field is "00", it indicates that the first subcarrier spacing is 30 kHz; when the value of the SCS field is "01 ", it indicates that the first subcarrier spacing is 15 Hz; when the value of the SCS field is "10", it indicates that the first subcarrier spacing is 120 kHz; and when the value of the SCS field is "11", it indicates that the first subcarrier spacing is 60 kHz. This is not specifically limited in this application.

It should be noted that the length of the SCS field in the first MAC CE may be two bits, or may be another length. This is not specifically limited in this application. For example, the length of the SCS field is three bits. For example, when the value of the SCS field is "000", it indicates that the first subcarrier spacing is 15 kHz; and when the value of the SCS field is "001", it indicates that the first subcarrier spacing is 30 kHz. When the value of the SCS field is "010", it indicates that the first subcarrier spacing is 60 kHz. When the value of the SCS field is "011", it indicates that the first subcarrier spacing is 120 kHz.

In some implementations, 303 specifically includes: The second node obtains, by multiplying the number of guard symbols that is indicated by the first MAC CE by the first ratio and then adding the number of guard symbols that is indicated by the second MAC CE, the number of guard symbols used or expected to be used in the second subcarrier spacing. The first ratio is the ratio of the second subcarrier spacing to the first subcarrier spacing. For related descriptions of the number of guard symbols used or expected to be used in the second subcarrier spacing in each scenario, refer to the related descriptions of 302. Details are not described herein again.

It should be noted that, optionally, a number of guard symbols used by the IAB node in the second subcarrier spacing is related to the second subcarrier spacing and a capability of the IAB node. For example, when an absolute time of working switching between the IAB MT and the IAB DU is fixed, the second subcarrier spacing is large, and the IAB node uses a larger number of guard symbols in the second subcarrier spacing.

In this embodiment of this application, the first node sends the first MAC CE to the second node, where the first MAC CE indicates the number of guard symbols used in the first subcarrier spacing; and the first node sends the second MAC CE to the second node, where the first MAC CE and the second MAC CE are jointly used to determine the number of guard symbols used or expected to be used in the second subcarrier spacing. It can be learned that, in the technical solution of this application, the first node indicates, by using the two MAC CEs, the number of guard symbols used or expected to be used in the second subcarrier spacing. Therefore, according to the technical solution of this application, the first node may indicate a number of guard symbols used or expected to be used in a larger subcarrier spacing, so that the second node determines the number of guard symbols used or expected to be used in the larger subcarrier spacing, to avoid a scheduling conflict.

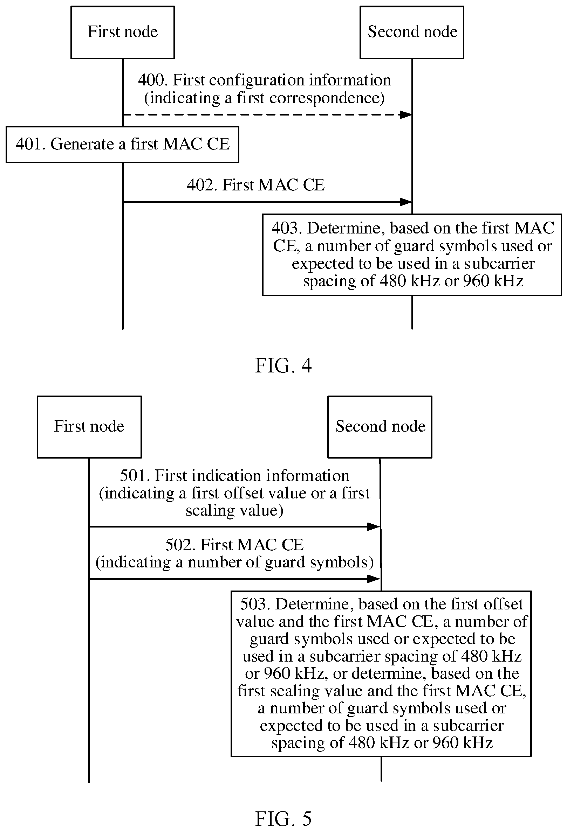

FIG. 4 is a schematic diagram of another embodiment of a guard symbol configuration method according to an embodiment of this application. Refer to FIG. 4. The guard symbol configuration method includes the following steps.

401. A first node generates a first MAC CE.

Specifically, the first node determines a number of guard symbols used or expected to be used in a subcarrier spacing of 480 kHz or 960 kHz. The first node generates the first MAC CE based on the number of guard symbols used or expected to be used in the subcarrier spacing of 480 kHz or 960 kHz. The first MAC CE indicates the number of guard symbols used or expected to be used in the subcarrier spacing of 480 kHz or 960 kHz.

In some implementations, 401 specifically includes a process a and a process b.

Process a: The first node determines the number of guard symbols used or expected to be used in the subcarrier spacing of 480 kHz or 960 kHz in each of a plurality of scenarios.

The plurality of scenarios are a plurality of receive/transmit conversion scenarios between an IAB MT and an IAB DU in an IAB node. The plurality of scenarios specifically include: the IAB node switches from downlink receiving of the IAB MT to downlink sending of the IAB DU; the IAB node switches from downlink receiving of the IAB MT to uplink receiving of the IAB DU; the IAB node switches from uplink sending of the IAB MT to downlink sending of the IAB DU; the IAB node switches from uplink sending of the IAB MT to uplink receiving of the IAB DU; and the IAB node switches from downlink receiving of the IAB DU to downlink sending of the IAB MT. The IAB node switches from downlink receiving of the IAB DU to uplink receiving of the IAB MT; the IAB node switches from uplink sending of the IAB DU to downlink sending of the IAB MT; and the IAB node switches from uplink sending of the IAB DU to uplink receiving of the IAB MT.

For example, the first node determines that numbers of guard symbols used or expected to be used in the subcarrier spacing of 480 kHz in the plurality of scenarios are 4, 6, 6, 8, 12, 14, 8, and 8 respectively.

For example, the first node determines that numbers of guard symbols used or expected to be used in the subcarrier spacing of 960 kHz in the plurality of scenarios are 8, 8, 8, 12, 16, 16, 8, and 20 respectively.

Process b: The first node determines, based on a first correspondence and the number of guard symbols used or expected to be used in the subcarrier spacing of 480 kHz or 960 kHz in each scenario, a value that is of a number of guard symbols NmbGS in the first MAC CE and that corresponds to each scenario, to obtain the first MAC CE.

The first correspondence is a correspondence between the value of an NmbGS field and the number of guard symbols. For example, for the subcarrier spacing of 480 kHz, the first correspondence may be represented by using the following Table 5.

Table 5

| Value of a NmbGS field | Number of guard symbols |
| --- | --- |
| 000 | 0 |
| 001 | 2 |
| 010 | 4 |
| 011 | 6 |
| 100 | 8 |
| 101 | 10 |
| 110 | 12 |
| 111 | 14 |

For the subcarrier spacing of 960 kHz, the first correspondence may be represented by using the following Table 6.

**Table 6**

| Value of a NmbGS field | Number of guard symbols |
| --- | --- |
| 000 | 0 |
| 001 | 4 |
| 010 | 8 |
| 011 | 12 |
| 100 | 16 |
| 101 | 20 |
| 110 | 24 |
| 111 | 28 |

For example, the first node determines that numbers of guard symbols used or expected to be used in the subcarrier spacing of 480 kHz in the plurality of scenarios are 4, 6, 6, 8, 12, 14, 8, and 8 respectively. The first node may determine, with reference to Table 5, that a value of a field $NmbGS_1$ in the first MAC CE is "010", a value of a field $NmbGS_2$ is "011", a value of a field $NmbGS_3$ is "011", a value of a field $NmbGS_4$ is "100", a value of a field $NmbGS_5$ is "110", a value of a field $NmbGS_6$ is "111", a value of a field $NmbGS_7$ is "100", and a value of a field $NmbGS_8$, is " 100", to obtain the first MAC CE.

For example, the first node determines that numbers of guard symbols used or expected to be used in the subcarrier spacing of 960 kHz in the plurality of scenarios are 8, 8, 8, 12, 16, 16, 8, and 20 respectively. The first node may determine, with reference to Table 6, that the value of the field $NmbGS_1$ in the first MAC CE is "010", the value of the field $NmbGS_2$ is "010", the value of the field $NmbGS_3$ is "010", the value of the field $NmbGS_4$ is "011", the value of the field $NmbGS_5$ is "100", the value of the field $NmbGS_6$ is "100", the value of the field $NmbGS_7$ is "010", and the value of the field $NmbGS_8$ is "101", to obtain the first MAC CE.

Optionally, the embodiment shown in FIG. 4 further includes 400, and 400 is performed before 401.

400. The first node sends first configuration information to a second node. The first configuration information indicates the first correspondence. The second node receives the first configuration information from the first node.

For related descriptions of the first correspondence, refer to the related descriptions of 401. Details are not described herein again.

In 400, the first node indicates the first correspondence to the second node, so that the second node determines, based on the first correspondence, a number of guard symbols that need to be reserved in the subcarrier spacing of 480 kHz or 960 kHz.

It should be noted that the first correspondence may alternatively be preset in the second node. This is not specifically limited in this application.

402. The first node sends the first MAC CE to the second node.

The following describes some possible implementations of a relationship between the first node and the second node.

Implementation 1: The first node is a lower-level node of the second node, the first node is an IAB MT, and the second node is an IAB DU or a donor DU.

The first node is a first relay node, and the IAB MT may be understood as an MT unit of the first relay node. The second node may be a second relay node, and the IAB DU may be understood as a DU unit of the second relay node. Alternatively, the second node may be a donor base station, and the donor DU may be understood as a DU unit in the donor base station.

In Implementation 1, the first MAC CE indicates a number of guard symbols expected to be used in a first subcarrier spacing. To be specific, the IAB MT indicates, to the upper-level node (the IAB DU or the donor DU), a number of guard symbols that the IAB MT expects to reserve in the first subcarrier spacing.

Implementation 2: The first node is an upper-level node of the second node, the first node is an IAB DU or a donor DU, and the second node is an IAB MT.

The first node is a third relay node, and the IAB DU may be understood as a DU unit of the third relay node. Alternatively, the second node is a donor base station, and the donor DU may be understood as a DU unit in the donor base station. The second node is a fourth relay node, and the IAB MT may be understood as an MT unit of the fourth relay node.

In Implementation 2, the first MAC CE indicates a number of guard symbols used in a first subcarrier spacing. To be specific, the upper-level node indicates, to the IAB MT, a number of guard symbols that the IAB MT needs to reserve in the first subcarrier spacing.

The following describes some implementations in which the first node indicates the subcarrier spacing of 480 kHz or 960 kHz to the second node.

Implementation 1: A reserved bit in the first MAC CE indicates that an SCS field in the first MAC CE indicates the subcarrier spacing of 480 kHz or 960 kHz.

In this implementation, the reserved bit in the first MAC CE is used as a special bit, and a value of the reserved bit may indicate that the SCS field in the first MAC CE indicates the subcarrier spacing of 480 kHz or 960 kHz.

For example, when the value of the reserved bit is "1", the SCS field in the first MAC CE indicates the subcarrier spacing of 480 kHz or 960 kHz. When the value of the SCS field is "00", it indicates that the first MAC CE indicates the number of guard symbols used or expected to be used in the subcarrier spacing of 480 kHz. When the value of the SCS field is "01", it indicates that the first MAC CE indicates the number of guard symbols used or expected to be used in the subcarrier spacing of 960 kHz.

Implementation 2: A reserved bit in the first MAC CE and a bit of the SCS field are used as an enhanced SCS field, and the enhanced SCS field indicates the subcarrier spacing of 480 kHz or 960 kHz.

For example, if a value of the enhanced SCS field is "100", it indicates that the first MAC CE indicates the number of guard symbols used or expected to be used in the subcarrier spacing of 480 kHz. When the value of the enhanced SCS field is "101", it indicates that the first MAC CE indicates the number of guard symbols used or expected to be used in the subcarrier spacing of 960 kHz.

Implementation 3: The first node indicates the subcarrier spacing of 480 kHz or 960 kHz by using a carrier for scheduling the second node to receive the first MAC CE. The subcarrier spacing of 480 kHz or 960 kHz is a subcarrier spacing of 480 kHz or 960 kHz used by at least one BWP in a carrier of the second node; the subcarrier spacing of 480 kHz or 960 kHz is a subcarrier spacing of 480 kHz or 960 kHz used by an active BWP in a carrier of the second node; the subcarrier spacing of 480 kHz or 960 kHz is a maximum subcarrier spacing of any BWP in a carrier of the second node; or the subcarrier spacing of 480 kHz or 960 kHz is a maximum subcarrier spacing of an active BWP in a carrier of the second node.

The first node is an upper-level node of the second node, the first node is an IAB DU or a donor DU, and the second node is an IAB MT.

The first node indicates the subcarrier spacing of 480 kHz or 960 kHz by using a carrier for scheduling the second node to receive the first MAC CE. In other words, the first node implicitly indicates that the first MAC CE indicates the number of guard symbols used or expected to be used in the subcarrier spacing of 480 kHz or 960 kHz.

Based on Implementation 3, 402 specifically includes: The second node receives the first MAC CE from the first node by using the carrier of the second node.

403. The second node determines, based on the first MAC CE, the number of guard symbols used or expected to be used in the subcarrier spacing of 480 kHz or 960 kHz.

In some implementations, the second node determines, based on the first correspondence and the value of the NmbGS field that corresponds to each of the plurality of scenarios and that is in the first MAC CE, the number of guard symbols used or expected to be used in the subcarrier spacing of 480 kHz or 960 kHz in each scenario.

The first correspondence is a correspondence between the value of the NmbGS field and the number of guard symbols. For descriptions of the plurality of scenarios, refer to the foregoing related descriptions. Details are not described herein again.

For example, the second node determines that the first MAC CE indicates the number of guard symbols used or expected to be used in the subcarrier spacing of 480 kHz. In the first MAC CE, the value of the field $NmbGS_1$ is "010", the value of the field $NmbGS_2$ is "011", the value of the field $NmbGS_3$ is "011", the value of the field $NmbGS_4$ is "100", the value of the field $NmbGS_5$ is "110", the value of the field $NmbGS_6$ is "111", the value of the field $NmbGS_7$ is "100", and the value of the field $NmbGS_8$, is "100", so that the first MAC CE is obtained. The second node may determine, with reference to Table 5, a number of guard symbols that need to be reserved in the subcarrier spacing of 480 kHz in each scenario.

For example, the second node determines that the first MAC CE indicates the number of guard symbols used or expected to be used in the subcarrier spacing of 960 kHz. In the first MAC CE, the value of the field $NmbGS_1$ is "010", the value of the field $NmbGS_2$ is "010", the value of the field $NmbGS_3$ is "010", the value of the field $NmbGS_4$ is "011", the value of the field $NmbGS_5$ is "100", the value of the field $NmbGS_6$ is "100", the value of the field $NmbGS_7$ is "010", and the value of the field $NmbGS_8$, is "101", so that the first MAC CE is obtained. The second node may determine, with reference to Table 6, a number of guard symbols that need to be reserved in the subcarrier spacing of 960 kHz in each scenario.

In some embodiments, before 403, if a first condition is met, the second node determines that the first MAC CE indicates the number of guard symbols used or expected to be used in the subcarrier spacing of 480 kHz or 960 kHz.

The first condition includes:

a reserved bit in the first MAC CE indicates that the SCS field in the first MAC CE indicates the subcarrier spacing of 480 kHz or the subcarrier spacing of 960 kHz;

a reserved bit and the SCS field in the first MAC CE are jointly used to indicate the subcarrier spacing of 480 kHz or the subcarrier spacing of 960 kHz;

at least one BWP in the carrier used by the second node used to receive the first MAC CE uses the subcarrier spacing of 480 kHz or 960 kHz; or

an active BWP in the carrier used by the second node to receive the first MAC CE uses the subcarrier spacing of 480 kHz or 960 kHz.

In other words, the second node first determines that the first MAC CE indicates the number of guard symbols used or expected to be used in the subcarrier spacing of 480 kHz or 960 kHz. Then, the second node determines, with reference to the first correspondence and the first MAC CE, the number of guard symbols that need to be reserved in the subcarrier spacing of 480 kHz or 960 kHz.

For example, the second node determines, based on a value of the reserved bit in the first MAC CE, that the SCS field in the first MAC CE indicates the subcarrier spacing of 480 kHz or the subcarrier spacing of 960 kHz. For example, when the value of the reserved bit is "1", it indicates that the SCS field in the first MAC CE indicates the subcarrier spacing of 480 kHz or the subcarrier spacing of 960 kHz.

For example, when a value of an enhanced SCS field obtained by combining the reserved bit and the SCS field in the first MAC CE is "100", it indicates that the first MAC CE indicates the number of guard symbols used or expected to be used in the subcarrier spacing of 480 kHz. When the value of the enhanced SCS field is " 101 ", it indicates that the first MAC CE indicates the number of guard symbols used or expected to be used in the subcarrier spacing of 960 kHz.

For example, if at least one BWP in the carrier used by the second node to receive the first MAC CE uses the subcarrier spacing of 480 kHz or 960 kHz, the second node may determine that the first MAC CE indicates the number of guard symbols used or expected to be used in the subcarrier spacing of 480 kHz or 960 kHz.

For example, if the active BWP in the carrier used by the second node to receive the first MAC CE uses the subcarrier spacing of 480 kHz or 960 kHz, the second node may determine that the first MAC CE indicates the number of guard symbols used or expected to be used in the subcarrier spacing of 480 kHz or 960 kHz.

It should be noted that, optionally, a number of guard symbols used by the IAB node in the second subcarrier spacing is related to the second subcarrier spacing and a capability of the IAB node. For example, when an absolute time of working switching between the IAB MT and the IAB DU is fixed, the second subcarrier spacing is large, and the IAB node uses a larger number of guard symbols in the second subcarrier spacing.

In this embodiment of this application, the first node generates the first MAC CE, where the first MAC CE indicates the number of guard symbols used or expected to be used in the subcarrier spacing of 480 kHz or 960 kHz; and then the first node sends the first MAC CE to the second node. It can be learned that the first node may indicate, by using the first MAC CE, a number of guard symbols used or expected to be used in a larger subcarrier spacing, so that the second node determines the number of guard symbols used or expected to be used in the larger subcarrier spacing, to avoid a scheduling conflict.

FIG. 5 is a schematic diagram of another embodiment of a guard symbol configuration method according to an embodiment of this application. Refer to FIG. 5. The guard symbol configuration method includes the following steps.

501. A first node sends first indication information to a second node. The first indication information indicates a first offset value or a first scaling value. Correspondingly, the second node receives the first indication information from the first node.

The first offset value is an offset value of a number of guard symbols, and the first scaling value is a scaling value of the number of guard symbols.

The following describes some possible implementations of a relationship between the first node and the second node.

Implementation 1: The first node is a lower-level node of the second node, the first node is an IAB MT, and the second node is an IAB DU or a donor DU.

The first node is a first relay node, and the IAB MT may be understood as an MT unit of the first relay node. The second node may be a second relay node, and the IAB DU may be understood as a DU unit of the second relay node. Alternatively, the second node may be a donor base station, and the donor DU may be understood as a DU unit in the donor base station.

In Implementation 1, the first MAC CE indicates a number of guard symbols expected to be used in a first subcarrier spacing. To be specific, the IAB MT indicates, to the upper-level node (the IAB DU or the donor DU), a number of guard symbols that the IAB MT expects to reserve in the first subcarrier spacing.

Implementation 2: The first node is an upper-level node of the second node, the first node is an IAB DU or a donor DU, and the second node is an IAB MT.

The first node is a third relay node, and the IAB DU may be understood as a DU unit of the third relay node. Alternatively, the second node is a donor base station, and the donor DU may be understood as a DU unit in the donor base station. The second node is a fourth relay node, and the IAB MT may be understood as an MT unit of the fourth relay node.

In Implementation 2, the first MAC CE indicates a number of guard symbols used in a first subcarrier spacing. To be specific, the upper-level node indicates, to the IAB MT, a number of guard symbols that the IAB MT needs to reserve in the first subcarrier spacing.

In a possible implementation, the first indication information indicates one offset value (that is, the first offset value), and a plurality of scenarios correspond to a same offset value, that is, the plurality of scenarios correspond to the first offset value. For example, the first offset value is 6. For related descriptions of the plurality of scenarios, refer to the foregoing related descriptions. Details are not described herein again.

The following describes a correspondence between a value of an NmbGS field and a number of guard symbols with reference to Table 7. For related descriptions of the NmbGS field, refer to the related descriptions of FIG. 2.

**Table 7**

| Value of a NmbGS field | Number of guard symbols |
|---|---|
| 000 | 6+0 |
| 001 | 6+1 |
| 010 | 6+1 |
| 011 | 6+3 |
| 100 | 6+4 |
| 101 | 6+5 |
| 110 | 6+6 |
| 111 | 6+7 |

In another possible implementation, the first indication information indicates an offset value corresponding to each of a plurality of scenarios, that is, each scenario has a corresponding offset value. For related descriptions of the plurality of scenarios, refer to the foregoing related descriptions. Details are not described herein again. For example, the following shows a correspondence between the plurality of scenarios and offset values with reference to Table 8.

**Table 8**

| Scenario | Offset value |
|---|---|
| DL Rx to DL Tx | 2 |
| DL Rx to UL Rx | 2 |
| UL Tx to DL Tx | 4 |
| UL Tx to UL Rx | 4 |
| DL Rx to DL Tx | 2 |
| DL Rx to UL Rx | 7 |
| UL Tx to DL Tx | 8 |
| UL Tx to UL Rx | 9 |

It can be learned from Table 8 that each scenario has a corresponding offset value. For example, in the DL Rx to DL Tx scenario, the correspondence between the value of the NmbGS field and the number of guard symbols may be represented by using Table 9. Table 9 is as follows.

**Table 9**

| Value of a NmbGS field | Number of guard symbols |
|---|---|
| 000 | 2+0 |

(continued)

| Value of a NmbGS field | Number of guard symbols |
|---|---|
| 001 | 2+1 |
| 010 | 2+1 |
| 011 | 2+3 |
| 100 | 2+4 |
| 101 | 2+5 |
| 110 | 2+6 |
| 111 | 2+7 |

In the UL Tx to DL Tx scenario, the correspondence between the value of the NmbGS field and the number of guard symbols may be represented by using Table 10. Table 10 is as follows.

**Table 10**

| Value of a NmbGS field | Number of guard symbols |
|---|---|
| 000 | 4+0 |
| 001 | 4+1 |
| 010 | 4+1 |
| 011 | 4+3 |
| 100 | 4+4 |
| 101 | 4+5 |
| 110 | 4+6 |
| 111 | 4+7 |

It can be learned that different scenarios correspond to different offset values. Therefore, correspondences between the value of the NmbGS field and the number of guard symbols that are used in different scenarios are also different.

It should be noted that, optionally, at least one of the following factors may be considered for setting sizes of the first offset value and the first scaling value: a size of a second subcarrier spacing and a capability of an IAB node. For example, when an absolute time of working switching between the IAB MT and the IAB DU is fixed, the second subcarrier spacing is large, the IAB node uses a larger number of guard symbols in the second subcarrier spacing, and the first offset value and the first scaling value may be large.

502. The first node sends the first MAC CE to the second node. The first MAC CE indicates the number of guard symbols. Correspondingly, the second node receives the first MAC CE from the first node.

The first offset value and the first MAC CE are jointly used to determine a number of guard symbols used or expected to be used in a subcarrier spacing of 480 kHz or 960 kHz. Alternatively, the first scaling value and the first MAC CE are jointly used to determine a number of guard symbols used or expected to be used in a subcarrier spacing of 480 kHz or 960 kHz. For a specific determining process, refer to related descriptions of 503. For a specific determining process of the second node, refer to related descriptions of 503.

A manner in which the first node indicates the subcarrier spacing of 480 kHz or 960 kHz to the second node is similar to the indication manner in the embodiment shown in FIG. 4. For details, refer to related descriptions in the embodiment shown in FIG. 4. Details are not described herein again.

It should be noted that there is no fixed execution sequence between 501 and 502. 501 may be performed before 502; or 502 may be performed before 501; or 501 and 502 are performed at the same time based on a case. This is not specifically limited in this application.

503. The second node determines, based on the first offset value and the first MAC CE, the number of guard symbols used or expected to be used in the subcarrier spacing of 480 kHz or 960 kHz, or the second node determines, based on the first scaling value and the first MAC CE, the number of guard symbols used or expected to be used in the subcarrier spacing of 480 kHz or 960 kHz.

Specifically, the second node obtains, by adding the first offset value to the number of guard symbols that is indicated by the first MAC CE, the number of guard symbols used or expected to be used in the subcarrier spacing of 480 kHz or 960 kHz, or the second node obtains, by multiplying the guard symbol that is indicated by the first MAC CE by the first scaling value, the number of guard symbols used or expected to be used in the subcarrier spacing of 480 kHz or 960 kHz.

In a possible implementation, the first MAC CE indicates a number of guard symbols corresponding to each of the plurality of scenarios. For the plurality of scenarios, refer to the foregoing related descriptions. Details are not described herein. The first offset value is used in each of the plurality of scenarios. 503 specifically includes: The second node obtains, by adding the first offset value to the number of guard symbols that corresponds to each scenario and that is indicated by the first MAC CE, the number of guard symbols used or expected to be used in the subcarrier spacing of 480 kHz or 960 kHz in each scenario.

For example, as shown in Table 7, the first offset value is 6, a value of a field $NmbGS_1$ in the first MAC CE is "000", a value of a field $NmbGS_2$ is "010", a value of a field $NmbGS_3$ is "011", a value of a field $NmbGS_4$ is "100", a value of a field $NmbGS_5$ is "110", a value of a field $NmbGS_6$ is "111", a value of a field $NmbGS_7$ is "100", and a value of a field $NmbGS_8$ is "100". The second node may determine, with reference to Table 7, a number of guard symbols that need to be reserved in the subcarrier spacing of 480 kHz in each scenario.

In another possible implementation, the first MAC CE indicates a number of guard symbols corresponding to each of the plurality of scenarios. For the plurality of scenarios, refer to the foregoing related descriptions. Details are not described herein. The first node may indicate one corresponding offset value for each of the plurality of scenarios by using the first indication information, that is, the first indication information indicates the offset value corresponding to each of the plurality of scenarios. 503 specifically includes: The second node obtains, by adding the offset value corresponding to each scenario to the number of guard symbols that corresponds to each scenario and that is indicated by the first MAC CE, the number of guard symbols used or expected to be used in the subcarrier spacing of 480 kHz or 960 kHz in each scenario.

For example, Table 8 shows an offset value corresponding to each of the plurality of scenarios. The value of the field $NmbGS_1$ in the first MAC CE is "000". The second node may learn, with reference to Table 9, that the number of guard symbols used or expected to be used in the subcarrier spacing of 480 kHz or 960 kHz in a scenario corresponding to the field $NmbGS_1$ is 2. A manner of determining the number of guard symbols used or expected to be used in the subcarrier spacing of 480 kHz or 960 kHz in another scenario is similar. Details are not described herein again.

The following describes a specific implementation in which the second node determines, based on the first MAC CE and the first scaling value, the number of guard symbols used or expected to be used in the subcarrier spacing of 480 kHz or 960 kHz.

Optionally, the first MAC CE indicates the number of guard symbols corresponding to each of the plurality of scenarios. The second node obtains, by multiplying the first scaling value by the number of guard symbols corresponding to each scenario, the number of guard symbols used or expected to be used in the subcarrier spacing of 480 kHz or 960 kHz in each scenario.

For example, the first scaling value is A, and the correspondence between the value of the NmbGS field in the first MAC CE and the number of guard symbols that is indicated by the NmbGS is shown in Table 11.

**Table 11**

| Value of a NmbGS field | Number of guard symbols |
| --- | --- |
| 000 | 0 |
| 001 | 1 |
| 010 | 2 |
| 011 | 3 |
| 100 | 4 |
| 101 | 5 |
| 110 | 6 |
| 111 | 7 |

For example, if the value of the field $NmbGS_1$ in the first MAC CE is "010", the second node may determine, with reference to Table 11 and the first scaling value A, that the number of guard symbols used or expected to be used in the subcarrier spacing of 480 kHz or 960 kHz in a scenario corresponding to the field $NmbGS_1$ is 2*A. If the value of

the field $NmbGS_2$ in the first MAC CE is "011", the second node may determine, with reference to Table 11 and the first scaling value A, that the number of guard symbols used or expected to be used in the subcarrier spacing of 480 kHz or 960 kHz in a scenario corresponding to the field $NmbGS_2$ is 3*A. A manner of determining the number of guard symbols used or expected to be used in the subcarrier spacing of 480 kHz or 960 kHz in another scenario is similar. Details are not described herein again.

In some implementations, before 503, the embodiment shown in FIG. 5 further includes: When a first condition is met, the second node determines that the first scaling value takes effect.

The first condition includes: at least one BWP in a carrier used by the second node to receive the first MAC CE uses the subcarrier spacing of 480 kHz or 960 kHz.

Alternatively, the first condition includes: an active BWP in a carrier used by the second node to receive the first MAC CE uses the subcarrier spacing of 480 kHz or 960 kHz.

It should be noted that, optionally, the first MAC CE indicates the number of guard symbols used or expected to be used in the first subcarrier spacing. The first scaling value is equal to a ratio of the subcarrier spacing of 480 kHz or 960 kHz to the first subcarrier spacing. For example, the first subcarrier spacing is 120 kHz. If the first scaling value and the first MAC CE are jointly used to determine the number of guard symbols used or expected to be used in the subcarrier spacing of 480 kHz, the first scaling value may be equal to 480 kHz/120 kHz=4. If the first scaling value and the first MAC CE are jointly used to determine the number of guard symbols used or expected to be used in the subcarrier spacing of 960 kHz, the first scaling value may be equal to 960 kHz/120 kHz=8.

In this embodiment of this application, the first node sends the first indication information to the second node. The first indication information indicates the first offset value or the first scaling value. The first node sends the first MAC CE to the second node, where the first MAC CE indicates the number of guard symbols. The first offset value and the first MAC CE are jointly used to determine the number of guard symbols used or expected to be used in the subcarrier spacing of 480 kHz or 960 kHz. Alternatively, the first scaling value and the first MAC CE are jointly used to determine the number of guard symbols used or expected to be used in the subcarrier spacing of 480 kHz or 960 kHz. It can be learned that the first node indicates, by using the first MAC CE and the first offset value, or by using the first MAC CE and the first scaling value, the number of guard symbols used or expected to be used in the subcarrier spacing of 480 kHz or 960 kHz. Therefore, according to the technical solution of this application, the first node may indicate a number of guard symbols used or expected to be used in a larger subcarrier spacing, so that the second node determines the number of guard symbols used or expected to be used in the larger subcarrier spacing, to avoid a scheduling conflict.

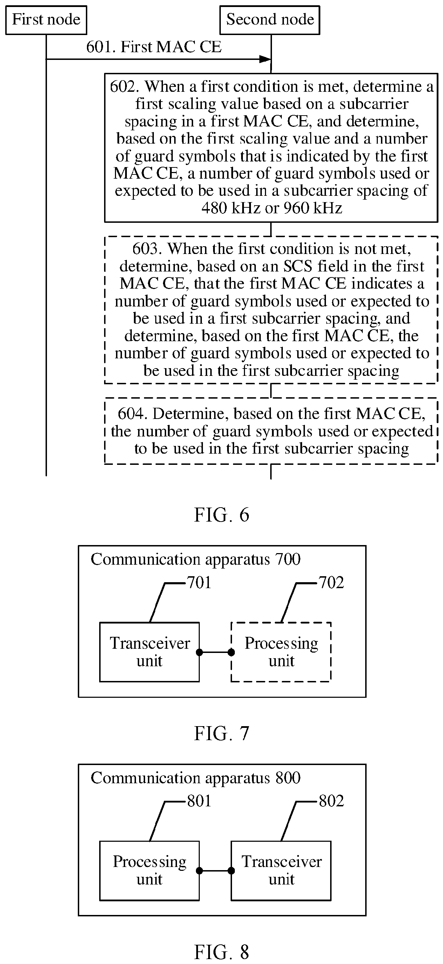

FIG. 6 is a schematic diagram of another embodiment of a guard symbol configuration method according to an embodiment of this application. Refer to FIG. 6. The guard symbol configuration method includes the following steps.

601. A first node sends a first MAC CE to a second node.

An SCS field in the first MAC CE indicates a first scaling value, and the first scaling value is a scaling value of a number of guard symbols that is indicated by the first MAC CE. The first scaling value and the first MAC CE are jointly used to determine a number of guard symbols used or expected to be used in a subcarrier spacing of 480 kHz or 960 kHz.

For example, the following shows a correspondence between a value of the SCS field and a scaling value with reference to Table 12.

**Table 12**

| Value of an SCS field | Scaling value |
|---|---|
| 00 | 1 |
| 01 | 2 |
| 10 | 4 |
| 11 | 8 |

It can be learned that, for example, it can be learned from Table 12 that, when the value of the SCS field is "00", it indicates that the first scaling value is 1. When the value of the SCS field is "01", it indicates that the first scaling value is 2. When the value of the SCS field is 10, it indicates that the first scaling value is 4. When the value of the SCS field is "11", it indicates that the first scaling value is 8.

It should be noted that Table 12 is merely an example of the correspondence between the value of the SCS field and the scaling value, and does not constitute a limitation on this application. For example, when the value of the SCS field is "00", it indicates that the first scaling value is 8, and when the value of the SCS field is "01 ", it indicates that the first scaling value is 4. When the value of the SCS field is "10", it indicates that the first scaling value is 2. When the value of the SCS field is "11", it indicates that the first scaling value is 1. This is not specifically limited in this application.

It should be noted that a length of the SCS field in the first MAC CE may be two bits, or may be another length.

This is not specifically limited in this application. For example, the length of the SCS field is one bit. When the value of the SCS field is "0", it indicates that the first scaling value is 1. When the value of the SCS field is "1", it indicates that the first scaling value is 2. Alternatively, when the value of the SCS field is "0", it indicates that the first scaling value is 2. When the value of the SCS field is "1", it indicates that the first scaling value is 1. This is not specifically limited in this application.

In some implementations, the first node schedules the second node to receive the first MAC CE by using a carrier of the second node.

At least one BWP in the carrier of the second node uses the subcarrier spacing of 480 kHz or 960 kHz, or an active BWP in the carrier of the second node uses the subcarrier spacing of 480 kHz or 960 kHz. In other words, the first node indicates the carrier used by the second node to receive the first MAC CE, to indirectly indicate that the first MAC CE indicates the number of guard symbols used or expected to be used in the subcarrier spacing of 480 kHz or 960 kHz. The second node may understand the value of the SCS field in the first MAC CE as the first scaling value.

For some possible implementations of a relationship between the first node and the second node, refer to related descriptions of 501 in the embodiment shown in FIG. 5. Details are not described herein again.

It should be noted that, optionally, at least one of the following factors may be considered for setting a size of the first scaling value: a size of a second subcarrier spacing and a capability of an IAB node. For example, when an absolute time of working switching between an IAB MT and an IAB DU is fixed, the second subcarrier spacing is large, the IAB node uses a larger number of guard symbols in the second subcarrier spacing, and the first scaling value may be large.

602. When a first condition is met, the second node determines the first scaling value based on the SCS field in the first MAC CE, and determines, based on the first scaling value and the number of guard symbols that is indicated by the first MAC CE, the number of guard symbols used or expected to be used in the subcarrier spacing of 480 kHz or 960 kHz.

The first condition includes any one of the following: at least one BWP in a carrier used by the second node to receive the first MAC CE uses the subcarrier spacing of 480 kHz or 960 kHz; or the active BWP in the carrier used by the second node to receive the first MAC CE uses the subcarrier spacing of 480 kHz or 960 kHz.

In step 602, if the first condition is met, the second node may read the first scaling value based on the SCS field in the first MAC CE. For example, as shown in Table 12, when the value of the SCS field is "01", it indicates that the first scaling value is 2. The second node obtains, by multiplying the first scaling value by the number of guard symbols that is indicated by the first MAC CE, the number of guard symbols used or expected to be used in the subcarrier spacing of 480 kHz or 960 kHz.

Optionally, the first MAC CE indicates the number of guard symbols corresponding to each of a plurality of scenarios. The second node obtains, by multiplying the first scaling value by the number of guard symbols corresponding to each scenario, the number of guard symbols used or expected to be used in the subcarrier spacing of 480 kHz or 960 kHz in each scenario.

603. If the first condition is not met, the second node determines, based on the SCS field, that the first MAC CE indicates a number of guard symbols used or expected to be used in a first subcarrier spacing.

The first subcarrier spacing is less than or equal to 120 kHz.

In step 603, if no BWP in the carrier used by the second node to receive the first MAC CE uses the subcarrier spacing of 480 kHz or 960 kHz, or the active BWP in the carrier does not use the subcarrier spacing of 480 kHz or 960 kHz, the second node determines, with reference to Table 1 and the value of the SCS field in the first MAC CE, that the first MAC CE indicates the number of guard symbols used or expected to be used in the first subcarrier spacing. For example, if the value of the SCS field in the first MAC CE is "00", the first subcarrier spacing is 15 kHz, and the second node may determine that the first MAC CE indicates a number of guard symbols used or expected to be used in 15 kHz.

604. The second node determines, based on the first MAC CE, the number of guard symbols used or expected to be used in the first subcarrier spacing.

Specifically, the first MAC CE indicates the number of guard symbols corresponding to each of the plurality of scenarios. It can be learned from Table 8 that the second node determines, based on Table 8 and a value of an NmbGS field that corresponds to each scenario and that is in the first MAC CE, the number of guard symbols used or expected to be used in the first subcarrier spacing in each scenario.

In this embodiment of this application, the first node sends the first MAC CE to the second node. The SCS field in the first MAC CE indicates the first scaling value, and the first scaling value is the scaling value of the number of guard symbols that is indicated by the first MAC CE. The first scaling value and the first MAC CE are jointly used to determine the number of guard symbols used or expected to be used in the subcarrier spacing of 480 kHz or 960 kHz. It can be learned that the first node indicates, by using the first MAC CE and the first scaling value, the number of guard symbols used or expected to be used in the subcarrier spacing of 480 kHz or 960 kHz, so that the second node determines a number of guard symbols used or expected to be used in a larger subcarrier spacing, to avoid a scheduling conflict.

A communication apparatus provided in embodiments of this application is described above. FIG. 7 is a schematic diagram of a structure of a communication apparatus according to an embodiment of this application. The communication apparatus 700 may be configured to perform the processes performed by the first device in the embodiments shown in FIG. 3, FIG. 5, and FIG. 6. For details, refer to related descriptions in the foregoing method embodiments.

The communication apparatus 700 includes a transceiver unit 701. Optionally, the communication apparatus 700 further includes a processing unit 702. The transceiver unit 701 may implement a corresponding communication function, and the processing unit 702 is configured to perform data processing. The transceiver unit 701 may also be referred to as a communication interface or a communication unit.

Optionally, the communication apparatus 700 may further include a storage unit. The storage unit may be configured to store instructions and/or data. The processing unit 702 may read the instructions and/or the data in the storage unit, to enable the communication apparatus to implement the foregoing method embodiments.

The communication apparatus 700 may be configured to perform an action performed by the first device in the foregoing method embodiments. The communication apparatus 700 may be the first device or a component that can be configured in the first device. The transceiver unit 701 is configured to perform a receiving-related operation on a first device side in the foregoing method embodiments, and the processing unit 702 is configured to perform a processing-related operation on the first device side in the foregoing method embodiments.

Optionally, the transceiver unit 701 may include a sending unit and a receiving unit. The sending unit is configured to perform a sending operation in the foregoing method embodiments. The receiving unit is configured to perform a receiving operation in the foregoing method embodiments.

It should be noted that the communication apparatus 700 may include the sending unit, but does not include the receiving unit. Alternatively, the communication apparatus 700 may include the receiving unit, but does not include the sending unit. This may specifically depend on whether the foregoing solutions executed by the communication apparatus 700 include a sending action and a receiving action.

In an example, the communication apparatus 700 is configured to perform an action performed by the first device in the embodiment shown in FIG. 3.

The transceiver unit 701 is configured to: send a first medium access control control element MAC CE to a second node, where the first MAC CE indicates a number of guard symbols used in a first subcarrier spacing; and send a second MAC CE to the second node, where the first MAC CE and the second MAC CE are jointly used to determine a number of guard symbols used or expected to be used in a second subcarrier spacing.

In an example, the communication apparatus 700 is configured to perform an action performed by the first device in the embodiment shown in FIG. 5.

The transceiver unit 701 is configured to: send first indication information to a second node, where the first indication information indicates a first offset value or a first scaling value, the first offset value is an offset value of a number of guard symbols, and the first scaling value is a scaling value of the number of guard symbols; and send a first MAC CE to the second node, where the first MAC CE indicates the number of guard symbols, and the first MAC CE and the first offset value are jointly used to determine a number of guard symbols used or expected to be used in a subcarrier spacing of 480 kHz or 960 kHz, or the first MAC CE and the first scaling value are jointly used to determine a number of guard symbols used or expected to be used in a subcarrier spacing of 480 kHz or 960 kHz.

In an example, the communication apparatus 700 is configured to perform an action performed by the first device in the embodiment shown in FIG. 6.

The transceiver unit 701 is configured to send a first MAC CE to a second node, where an SCS field in the first MAC CE indicates a first scaling value, the first scaling value is a scaling value of a number of guard symbols that is indicated by the first MAC CE, and the first scaling value and the number of guard symbols that is indicated by the first MAC CE are jointly used to determine a number of guard symbols used or expected to be used in a subcarrier spacing of 480 kHz or 960 kHz.

It should be understood that, that the units perform the corresponding processes is described in detail in the foregoing method embodiments. For brevity, details are not described herein.

The processing unit 702 in the foregoing embodiment may be implemented by using at least one processor or a processor-related circuit. The transceiver unit 701 may be implemented by using a transceiver or a transceiver-related circuit. The transceiver unit 701 may also be referred to as a communication unit or a communication interface. The storage unit may be implemented by using at least one memory.

A communication apparatus provided in embodiments of this application is described above. FIG. 8 is a schematic diagram of a structure of a communication apparatus according to an embodiment of this application. The communication apparatus 800 may be configured to perform the process performed by the first device in the embodiment shown in FIG. 4. For details, refer to related descriptions in the foregoing method embodiments.

The communication apparatus 800 includes a processing unit 801 and a transceiver unit 802. The transceiver unit 802 may implement a corresponding communication function, and the processing unit 801 is configured to perform data processing. The transceiver unit 802 may also be referred to as a communication interface or a communication unit.

Optionally, the communication apparatus 800 may further include a storage unit. The storage unit may be configured to store instructions and/or data. The processing unit 801 may read the instructions and/or the data in the storage unit, to enable the communication apparatus to implement the foregoing method embodiments.

The communication apparatus 800 may be configured to perform an action performed by the first device in the foregoing method embodiments. The communication apparatus 800 may be the first device or a component that can be configured in the first device. The transceiver unit 802 is configured to perform a receiving-related operation on a first device side in the foregoing method embodiments, and the processing unit 801 is configured to perform a processing-related operation on the first device side in the foregoing method embodiments.

Optionally, the transceiver unit 802 may include a sending unit and a receiving unit. The sending unit is configured to perform a sending operation in the foregoing method embodiments. The receiving unit is configured to perform a receiving operation in the foregoing method embodiments.

It should be noted that the communication apparatus 800 may include the sending unit, but does not include the receiving unit. Alternatively, the communication apparatus 800 may include the receiving unit, but does not include the sending unit. This may specifically depend on whether the foregoing solutions executed by the communication apparatus 800 include a sending action and a receiving action.

In an example, the communication apparatus 800 is configured to perform an action performed by the first device in the embodiment shown in FIG. 4.

The processing unit 801 is configured to generate a first MAC CE, where the first MAC CE indicates a number of guard symbols used or expected to be used in a subcarrier spacing of 480 kHz or 960 kHz.

The transceiver unit 802 is configured to send the first MAC CE to a second node.

Optionally, the transceiver unit 802 is further configured to perform 400 in the embodiment shown in FIG. 4.

It should be understood that, that the units perform the corresponding processes is described in detail in the foregoing method embodiments. For brevity, details are not described herein.

The processing unit 801 in the foregoing embodiment may be implemented by using at least one processor or a processor-related circuit. The transceiver unit 802 may be implemented by using a transceiver or a transceiver-related circuit. The transceiver unit 802 may also be referred to as a communication unit or a communication interface. The storage unit may be implemented by using at least one memory.

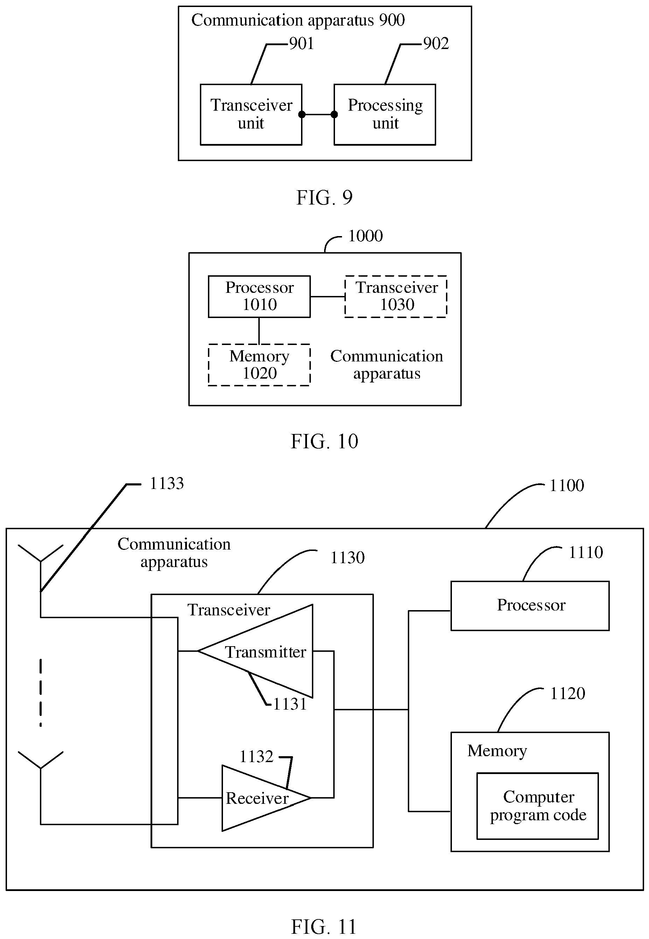

A communication apparatus provided in embodiments of this application is described above. FIG. 9 is a schematic diagram of a structure of a communication apparatus according to an embodiment of this application. The communication apparatus 900 may be configured to perform the processes performed by the second device in the embodiments shown in FIG. 3 to FIG. 6. For details, refer to related descriptions in the foregoing method embodiments.

The communication apparatus 900 includes a transceiver unit 901 and a processing unit 902. The transceiver unit 901 may implement a corresponding communication function, and the processing unit 902 is configured to perform data processing. The transceiver unit 901 may also be referred to as a communication interface or a communication unit.

Optionally, the communication apparatus 900 may further include a storage unit. The storage unit may be configured to store instructions and/or data. The processing unit 902 may read the instructions and/or the data in the storage unit, to enable the communication apparatus to implement the foregoing method embodiments.

The communication apparatus 900 may be configured to perform an action performed by the second device in the foregoing method embodiments. The communication apparatus 900 may be the second device or a component that can be configured in the second device. The transceiver unit 901 is configured to perform a receiving-related operation on a second device side in the foregoing method embodiments, and the processing unit 902 is configured to perform a processing-related operation on the second device side in the foregoing method embodiments.

Optionally, the transceiver unit 901 may include a sending unit and a receiving unit. The sending unit is configured to perform a sending operation in the foregoing method embodiments. The receiving unit is configured to perform a receiving operation in the foregoing method embodiments.

It should be noted that the communication apparatus 900 may include the sending unit, but does not include the receiving unit. Alternatively, the communication apparatus 900 may include the receiving unit, but does not include the sending unit. This may specifically depend on whether the foregoing solutions executed by the communication apparatus 900 include a sending action and a receiving action.

In an example, the communication apparatus 900 is configured to perform an action performed by the second device in the embodiment shown in FIG. 3.

The transceiver unit 901 is configured to: receive a first MAC CE from a communication apparatus, where the first MAC CE indicates a number of guard symbols used in a first subcarrier spacing; and receive a second MAC CE from the communication apparatus.

The processing unit 902 is configured to determine, based on the first MAC CE and the second MAC CE, a number of guard symbols used or expected to be used in a second subcarrier spacing.

In an example, the communication apparatus 900 is configured to perform an action performed by the second device in the embodiment shown in FIG. 4.

The transceiver unit 901 is configured to receive a first MAC CE from a first node.

The processing unit 902 is configured to determine, based on the first MAC CE, a number of guard symbols used or expected to be used in a subcarrier spacing of 480 kHz or 960 kHz.

In an example, the communication apparatus 900 is configured to perform an action performed by the second device in the embodiment shown in FIG. 5.

The transceiver unit 901 is configured to receive first indication information from a first node, where the first indication information indicates a first offset value or a first scaling value, the first offset value is an offset value of a number of guard symbols, and the first scaling value is a scaling value of the number of guard symbols; and receive a first MAC CE from the first node.

The processing unit 902 is configured to: determine, based on the first offset value and the first MAC CE, a number of guard symbols used or expected to be used in a subcarrier spacing of 480 kHz or 960 kHz, or determine, based on the first scaling value and the first MAC CE, a number of guard symbols used or expected to be used in a subcarrier spacing of 480 kHz or 960 kHz.

In an example, the communication apparatus 900 is configured to perform an action performed by the second device in the embodiment shown in FIG. 6.

The transceiver unit 901 is configured to receive a first MAC CE from a first node.

The processing unit 902 is configured to: when a first condition is met, determine a first scaling value based on an SCS field in the first MAC CE, and determine, based on the first scaling value and a number of guard symbols that is indicated by the first MAC CE, a number of guard symbols used or expected to be used in a subcarrier spacing of 480 kHz or 960 kHz.

The first condition includes any one of the following: at least one BWP in a carrier used by the communication apparatus to receive the first MAC CE uses the subcarrier spacing of 480 kHz or 960 kHz; or an active BWP in a carrier uses the subcarrier spacing of 480 kHz or 960 kHz.

Optionally, the processing unit 902 is further configured to perform 603 and 604 in the embodiment shown in FIG. 6.

It should be understood that, that the units perform the corresponding processes is described in detail in the foregoing method embodiments. For brevity, details are not described herein.

The processing unit 902 in the foregoing embodiment may be implemented by using at least one processor or a processor-related circuit. The transceiver unit 901 may be implemented by using a transceiver or a transceiver-related circuit. The transceiver unit 901 may also be referred to as a communication unit or a communication interface. The storage unit may be implemented by using at least one memory.

An embodiment of this application further provides a communication apparatus. FIG. 10 is another schematic diagram of a structure of a communication apparatus according to an embodiment of this application. The communication apparatus 1000 includes a processor 1010. The processor 1010 is coupled to a memory 1020. The memory 1020 is configured to store a computer program or instructions and/or data. The processor 1010 is configured to execute the computer program or the instructions and/or the data stored in the memory 1020, so that the method in the foregoing method embodiments is performed.

Optionally, the communication apparatus 1000 includes one or more processors 1010.

Optionally, as shown in FIG. 10, the communication apparatus 1000 may further include the memory 1020.

Optionally, the communication apparatus 1000 may include one or more memories 1020.

Optionally, the memory 1020 may be integrated with the processor 1010, or may be separately disposed.

Optionally, as shown in FIG. 10, the communication apparatus 1000 may further include a transceiver 1030, and the transceiver 1030 is configured to receive and/or send a signal. For example, the processor 1010 is configured to control the transceiver 1030 to receive and/or send a signal.

In a solution, the communication apparatus 1000 is configured to perform an operation performed by the first device in the foregoing method embodiments.

For example, the processor 1010 is configured to perform a processing-related operation performed by the first device in the foregoing method embodiments, and the transceiver 1030 is configured to perform a receiving/sending-related operation performed by the first device in the foregoing method embodiments.

In another solution, the communication apparatus 1000 is configured to perform an operation performed by the second device in the foregoing method embodiments.

For example, the processor 1010 is configured to perform a processing-related operation performed by the second device in the foregoing method embodiments, and the transceiver 1030 is configured to perform a receiving/sending-related operation performed by the second device in the foregoing method embodiments.

In the communication apparatus shown in FIG. 10, a component configured to receive power in the transceiver 1030 may be considered as a receiving unit, and a component configured to perform a sending function in the transceiver 1030 may be considered as a sending unit. That is, the transceiver 1030 may include a receiver and a transmitter. The transceiver 1030 may also be referred to as a transceiver unit, a transceiver circuit, or the like. The receiver may also be referred to as a receiving unit, a receiving circuit, or the like. The transmitter may also be referred to as a transmit unit, a transmit circuit, or the like. The processor 1010 has a processing function, and the processor 1010 may be referred to as a processing unit. The memory 1020 is configured to store computer program code and data, and the memory 1020 may also be referred to as a storage unit.

An embodiment of this application further provides a communication apparatus 1100. The communication apparatus 1100 may be a first device or a second device, or may be a chip in the first device or the second device. The communication apparatus 1100 may be configured to perform an operation performed by the first device or the second device in the foregoing method embodiments.

FIG. 11 is a schematic diagram of a structure of a first device or a second device. The first device or the second device includes a part 1110, a part 1120, and a part 1130. The part 1110 is mainly configured to perform baseband processing, control a base station, and the like. The part 1210 is usually a control center of the base station, may be usually referred to as a processor or a processing unit, and is configured to control the first device or the second device to perform a processing operation on a first device side or a second device side in the foregoing method embodiments. The part 1120 is mainly configured to store computer program code and data, and may usually be a memory or a storage unit. The part 1130 is mainly configured to receive and send a radio frequency signal and perform conversion between a radio frequency signal and a baseband signal. The part 1130 may be usually referred to as a transceiver unit, a transceiver, a transceiver circuit, or the like. The transceiver unit in the part 1130 may also be referred to as a transceiver, or the like, and includes an antenna 1133 and a radio frequency circuit (not shown in the figure). The radio frequency circuit is mainly configured to perform radio frequency processing. Optionally, a component configured to implement a receiving function in the part 1130 may be considered as a receiver, and a component configured to implement a sending function may be considered as a transmitter. That is, the part 1130 includes the receiver 1132 and the transmitter 1131. The receiver may also be referred to as a receiving unit, a receiving circuit, or the like. The transmitter may be referred to as a transmit unit, a sending unit, a transmit circuit, or the like.

The part 1110 and the part 1120 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, or the plurality of boards share one or more memories, or the plurality of boards share one or more processors at the same time.

In an implementation, the transceiver unit in the part 1130 is configured to perform a receiving/sending-related process performed by the first device or the second device in the embodiments shown in FIG. 3 to FIG. 6. The processor in the part 1110 is configured to perform a processing-related process performed by the first device or the second device in the embodiments shown in FIG. 3 to FIG. 6.

It should be understood that FIG. 11 is merely an example rather than a limitation. A network device including the processor, the memory, and the transceiver may not depend on the structure shown in FIG. 11.

When the communication apparatus 1100 is a chip, the chip includes the transceiver, the memory, and the processor. The transceiver may be an input/output circuit or a communication interface. The processor is a processor, a microprocessor, or an integrated circuit that is integrated on the chip. The sending operation of the first device or the second device in the foregoing method embodiments may be understood as an output of the chip, and the receiving operation of the first device or the second device in the foregoing method embodiments may be understood as an input of the chip.

An embodiment of this application further provides a computer-readable storage medium. The computer-readable storage medium stores computer instructions used to implement a method performed by the first device or a method performed by the second device in the foregoing method embodiments.

For example, when the computer program is executed by a computer, the computer is enabled to implement the method performed by the first device or the method performed by the second device in the foregoing method embodiments.

An embodiment of this application further provides a computer program product including instructions. When the instructions are executed by a computer, the computer is enabled to implement a method performed by the first device or a method performed by the second device in the foregoing method embodiments.

An embodiment of this application further provides a communication system. The communication system includes a first device and a second device. The first device is configured to perform a process performed by the first device in the embodiments shown in FIG. 3 to FIG. 6. The second device is configured to perform a process performed by the second device in the embodiments shown in FIG. 3 to FIG. 6.

An embodiment of this application further provides a chip apparatus, including a processor, configured to invoke a computer degree or computer instructions stored in a memory, to enable the processor to perform the guard symbol configuration method in the embodiments shown in FIG. 3 to FIG. 6.

In a possible implementation, an input of the chip apparatus corresponds to a receiving operation in the embodiments shown in FIG. 3 to FIG. 6, and an output of the chip apparatus corresponds to a sending operation in the embodiments shown in FIG. 3 to FIG. 6.

Optionally, the processor is coupled to the memory through an interface.

Optionally, the chip apparatus further includes the memory, and the memory stores the computer degree or the computer instructions.

The processor mentioned in any of the foregoing may be a general-purpose central processing unit, a microprocessor, an application-specific integrated circuit (application-specific integrated circuit, ASIC), or one or more integrated circuits configured to control program execution of the guard symbol configuration method in the embodiments shown in FIG. 3 and FIG. 6. The memory mentioned in any one of the foregoing may be a read-only memory (read-only memory, ROM), another type of static storage device that can store static information and instructions, a random access memory (random access memory, RAM), or the like.

It may be clearly understood by persons skilled in the art that, for the purpose of convenient and brief description, for explanations of related content and beneficial effects in any of the foregoing provided communication apparatuses, refer to corresponding method embodiments provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electrical, mechanical, or another form.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on this understanding, a part that essentially contributes to the technical solutions of this application or all or a part of the technical solutions may be embodied in a form of a software product. The computer software product is stored in a storage medium, and includes several instructions for enabling a computer device (which may be a personal computer, a server, a network device, or the like) to perform all or some processes of the methods in embodiments of this application. The foregoing storage medium includes: any medium that can store program code, such as a USB flash drive, a removable hard disk, a read-only memory, a random access memory, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A guard symbol configuration method, wherein the method comprises:

sending, by a first node, a first medium access control control element MAC CE to a second node, wherein the first MAC CE indicates a number of guard symbols used in a first subcarrier spacing; and
sending, by the first node, a second MAC CE to the second node, wherein the first MAC CE and the second MAC CE are jointly used to determine a number of guard symbols used or expected to be used in a second subcarrier spacing.

2. The method according to claim 1, wherein the number of guard symbols used or expected to be used in the second subcarrier spacing is obtained by multiplying the number of guard symbols that is indicated by the first MAC CE by a first ratio and then adding a number of guard symbols that is indicated by the second MAC CE, and the first ratio is a ratio of the second subcarrier spacing to the first subcarrier spacing.

3. The method according to claim 1 or 2, wherein

the first node is an integrated access and backhaul mobile terminal IAB MT, and the second node is an integrated access and backhaul distributed unit IAB DU or a donor distributed unit donor DU; or
the first node is an IAB DU or a donor DU, and the second node is an IAB MT.

4. The method according to any one of claims 1 to 3, wherein the first subcarrier spacing is 15 kHz, 30 kHz, 60 kHz, or 120 kHz, and the second subcarrier spacing is 480 kHz or 960 kHz.

5. The method according to any one of claims 1 to 4, wherein the second MAC CE comprises a subcarrier spacing SCS field, and a value of the SCS field indicates the second subcarrier spacing.

6. The method according to any one of claims 1 to 4, wherein the second subcarrier spacing is a subcarrier spacing used by a bandwidth part BWP in a carrier of the second node, the subcarrier spacing is 480 kHz or 960 kHz, and the carrier of the second node is a carrier used by the first node to schedule the second node to receive the second MAC CE;

the second subcarrier spacing is a subcarrier spacing used by an active bandwidth part BWP in a carrier of the second node, the subcarrier spacing is 480 kHz or 960 kHz, and the carrier of the second node is a carrier used by the first node to schedule the second node to receive the second MAC CE;
the second subcarrier spacing is a maximum subcarrier spacing of any bandwidth part BWP in a carrier of the second node, and the carrier of the second node is a carrier used by the first node to schedule the second node to receive the second MAC CE; or
the second subcarrier spacing is a maximum subcarrier spacing of an active bandwidth part BWP in a carrier of the second node, and the carrier of the second node is a carrier used by the first node to schedule the second node to receive the second MAC CE.

7. The method according to any one of claims 1 to 6, wherein a reserved bit in the first MAC CE indicates that the first MAC CE is a first-type MAC CE, and a reserved bit in the second MAC CE indicates that the second MAC CE is a second-type MAC CE.

8. The method according to any one of claims 1 to 6, wherein the method further comprises:

mapping, by the first node, the first MAC CE to a first logical channel, and mapping the second MAC CE to a second logical channel, wherein the first MAC CE mapped to the first logical channel is a first-type MAC CE, and the second MAC CE mapped to the second logical channel is a second-type MAC CE;
the sending, by a first node, a first medium access control control element MAC CE to a second node comprises:

sending, by the first node, the first MAC CE to the second node through the first logical channel; and
the sending, by the first node, a second MAC CE to the second node comprises:
sending, by the first node, the second MAC CE to the second node through the second logical channel.

9. A guard symbol configuration method, wherein the method comprises:

receiving, by a second node, a first medium access control control element MAC CE from a first node, wherein the first MAC CE indicates a number of guard symbols used in a first subcarrier spacing;
receiving, by the second node, a second MAC CE from the first node; and

determining, by the second node based on the first MAC CE and the second MAC CE, a number of guard symbols used or expected to be used in a second subcarrier spacing.

10. The method according to claim 9, wherein the determining, by the second node based on the first MAC CE and the second MAC CE, a number of guard symbols used or expected to be used in a second subcarrier spacing comprises: obtaining, by the second node by multiplying the number of guard symbols that is indicated by the first MAC CE by a first ratio and then adding a number of guard symbols that is indicated by the second MAC CE, the number of guard symbols used or expected to be used in the second subcarrier spacing, wherein the first ratio is a ratio of the second subcarrier spacing to the first subcarrier spacing.

11. The method according to claim 9 or 10, wherein

the first node is an integrated access and backhaul mobile terminal IAB MT, and the second node is an integrated access and backhaul distributed unit IAB DU or a donor distributed unit donor DU; or
the first node is an IAB DU or a donor DU, and the second node is an IAB MT.

12. The method according to any one of claims 9 to 11, wherein the first subcarrier spacing is 15 kHz, 30 kHz, 60 kHz, or 120 kHz, and the second subcarrier spacing is 480 kHz or 960 kHz.

13. The method according to any one of claims 9 to 12, wherein the second MAC CE comprises a subcarrier spacing SCS field, and a value of the SCS field indicates the second subcarrier spacing.

14. The method according to any one of claims 9 to 12, wherein the second subcarrier spacing is a subcarrier spacing used by a bandwidth part BWP in a carrier of the second node, the subcarrier spacing is 480 kHz or 960 kHz, and the carrier of the second node is a carrier used by the first node to schedule the second node to receive the second MAC CE;

the second subcarrier spacing is a subcarrier spacing used by an active bandwidth part BWP in a carrier of the second node, the subcarrier spacing is 480 kHz or 960 kHz, and the carrier of the second node is a carrier used by the first node to schedule the second node to receive the second MAC CE;
the second subcarrier spacing is a maximum subcarrier spacing of any bandwidth part BWP in a carrier of the second node, and the carrier of the second node is a carrier used by the first node to schedule the second node to receive the second MAC CE; or
the second subcarrier spacing is a maximum subcarrier spacing of an active bandwidth part BWP in a carrier of the second node, and the carrier of the second node is a carrier used by the first node to schedule the second node to receive the second MAC CE.

15. The method according to any one of claims 9 to 14, wherein before the determining, by the second node based on the first MAC CE and the second MAC CE, a number of guard symbols used or expected to be used in a second subcarrier spacing, the method further comprises:

determining, by the second node based on a reserved bit in the first MAC CE, that the first MAC CE is a first-type MAC CE; and
determining, by the second node based on a reserved bit in the second MAC CE, that the second MAC CE is a second-type MAC CE.

16. The method according to any one of claims 9 to 14, wherein the receiving, by a second node, a first medium access control control element MAC CE from a first node comprises:

receiving, by the second node, the first MAC CE from the first node through a first logical channel;
the receiving, by the second node, a second MAC CE from the first node comprises:

receiving, by the second node, the second MAC CE from the first node through a second logical channel; and
the method further comprises:
determining, by the second node through the first logical channel, that the first MAC CE is a first-type MAC CE, and determining, through the second logical channel, that the second MAC CE is a second-type MAC CE.

17. A communication apparatus, wherein the communication apparatus comprises a transceiver module, wherein

the transceiver module is configured to: send a first medium access control control element MAC CE to a second node, wherein the first MAC CE indicates a number of guard symbols used in a first subcarrier spacing; and send a second MAC CE to the second node, wherein the first MAC CE and the second MAC CE are jointly used to determine a number of guard symbols used or expected to be used in a second subcarrier spacing.

18. The communication apparatus according to claim 17, wherein the number of guard symbols used or expected to be used in the second subcarrier spacing is obtained by multiplying the number of guard symbols that is indicated by the first MAC CE by a first ratio and then adding a number of guard symbols that is indicated by the second MAC CE, and the first ratio is a ratio of the second subcarrier spacing to the first subcarrier spacing.

19. The communication apparatus according to claim 17 or 18, wherein the communication apparatus is an integrated access and backhaul mobile terminal IAB MT, and the second node is an integrated access and backhaul distributed unit IAB DU or a donor distributed unit donor DU; or
the communication apparatus is an IAB DU or a donor DU, and the second node is an IAB MT.

20. The communication apparatus according to any one of claims 17 to 19, wherein the first subcarrier spacing is 15 kHz, 30 kHz, 60 kHz, or 120 kHz, and the second subcarrier spacing is 480 kHz or 960 kHz.

21. The communication apparatus according to any one of claims 17 to 20, wherein the second MAC CE comprises a subcarrier spacing SCS field, and a value of the SCS field indicates the second subcarrier spacing.

22. The communication apparatus according to any one of claims 17 to 20, wherein the second subcarrier spacing is a subcarrier spacing used by a bandwidth part BWP in a carrier of the second node, the subcarrier spacing is 480 kHz or 960 kHz, and the carrier of the second node is a carrier used by the communication apparatus to schedule the second node to receive the second MAC CE;

the second subcarrier spacing is a subcarrier spacing used by an active bandwidth part BWP in a carrier of the second node, the subcarrier spacing is 480 kHz or 960 kHz, and the carrier of the second node is a carrier used by the communication apparatus to schedule the second node to receive the second MAC CE;
the second subcarrier spacing is a maximum subcarrier spacing of any bandwidth part BWP in a carrier of the second node, and the carrier of the second node is a carrier used by the communication apparatus to schedule the second node to receive the second MAC CE; or
the second subcarrier spacing is a maximum subcarrier spacing of an active bandwidth part BWP in a carrier of the second node, and the carrier of the second node is a carrier used by the communication apparatus to schedule the second node to receive the second MAC CE.

23. The communication apparatus according to any one of claims 17 to 22, wherein a reserved bit in the first MAC CE indicates that the first MAC CE is a first-type MAC CE, and a reserved bit in the second MAC CE indicates that the second MAC CE is a second-type MAC CE.

24. The communication apparatus according to any one of claims 17 to 22, wherein the communication apparatus further comprises a processing module, wherein

the processing module is configured to: map the first MAC CE to a first logical channel, and map the second MAC CE to a second logical channel, wherein the first MAC CE mapped to the first logical channel is a first-type MAC CE, and the second MAC CE mapped to the second logical channel is a second-type MAC CE; and
the transceiver module is specifically configured to: send the first MAC CE to the second node through the first logical channel, and send the second MAC CE to the second node through the second logical channel.

25. A communication apparatus, wherein the communication apparatus comprises a transceiver module and a processing module, wherein

the transceiver module is configured to: receive a first medium access control control element MAC CE from a first node, wherein the first MAC CE indicates a number of guard symbols used in a first subcarrier spacing; and receive a second MAC CE from the first node; and
the processing module is configured to determine, based on the first MAC CE and the second MAC CE, a number of guard symbols used or expected to be used in a second subcarrier spacing.

26. The communication apparatus according to claim 25, wherein the processing module is specifically configured to: obtain, by multiplying the number of guard symbols that is indicated by the first MAC CE by a first ratio and then adding a number of guard symbols that is indicated by the second MAC CE, the number of guard symbols used or expected to be used in the second subcarrier spacing, wherein the first ratio is a ratio of the second subcarrier spacing to the first subcarrier spacing.

27. The communication apparatus according to claim 25 or 26, wherein the first node is an integrated access and backhaul mobile terminal IAB MT, and the communication apparatus is an integrated access and backhaul distributed unit IAB DU or a donor distributed unit donor DU; or
the first node is an IAB DU or a donor DU, and the communication apparatus is an IAB MT.

28. The communication apparatus according to any one of claims 25 to 27, wherein the first subcarrier spacing is 15 kHz, 30 kHz, 60 kHz, or 120 kHz, and the second subcarrier spacing is 480 kHz or 960 kHz.

29. The communication apparatus according to any one of claims 25 to 28, wherein the second MAC CE comprises a subcarrier spacing SCS field, and a value of the SCS field indicates the second subcarrier spacing.

30. The communication apparatus according to any one of claims 25 to 29, wherein the second subcarrier spacing is a subcarrier spacing used by a bandwidth part BWP in a carrier of the communication apparatus, the subcarrier spacing is 480 kHz or 960 kHz, and the carrier of the communication apparatus is a carrier used by the first node to schedule the communication apparatus to receive the second MAC CE;

the second subcarrier spacing is a subcarrier spacing used by an active bandwidth part BWP in a carrier of the communication apparatus, the subcarrier spacing is 480 kHz or 960 kHz, and the carrier of the communication apparatus is a carrier used by the first node to schedule the communication apparatus to receive the second MAC CE;
the second subcarrier spacing is a maximum subcarrier spacing of any bandwidth part BWP in a carrier of the communication apparatus, and the carrier of the communication apparatus is a carrier used by the first node to schedule the communication apparatus to receive the second MAC CE; or
the second subcarrier spacing is a maximum subcarrier spacing of an active bandwidth part BWP in a carrier of the communication apparatus, and the carrier of the communication apparatus is a carrier used by the first node to schedule the communication apparatus to receive the second MAC CE.

31. The communication apparatus according to any one of claims 25 to 30, wherein the processing module is further configured to:
determine, based on a reserved bit in the first MAC CE, that the first MAC CE is a first-type MAC CE, and determine, based on a reserved bit in the second MAC CE, that the second MAC CE is a second-type MAC CE.

32. The communication apparatus according to any one of claims 25 to 30, wherein the transceiver module is specifically configured to:

receive the first MAC CE from the first node through a first logical channel, and receive the second MAC CE from the first node through a second logical channel; and
the processing module is further configured to:
determine, through the first logical channel, that the first MAC CE is a first-type MAC CE, and determine, through the second logical channel, that the second MAC CE is a second-type MAC CE.

33. A communication apparatus, wherein the communication apparatus comprises:

a memory, configured to store a computer program or instructions; and
a processor, configured to execute the computer program or the instructions stored in the memory, to enable the communication apparatus to perform the method according to any one of claims 1 to 8, or enable the communication apparatus to perform the method according to any one of claims 9 to 16.

34. A communication apparatus, wherein the communication apparatus comprises a processor, and the processor is configured to execute a computer program or instructions in a memory, to perform the method according to any one of claims 1 to 16.

**35.** A computer-readable storage medium, comprising a computer program or instructions, wherein when the computer program is executed by a communication apparatus, the communication apparatus is enabled to perform the method according to any one of claims 1 to 16.

FIG. 1A

FIG. 1B

| R | Serving Cell ID | | SCS | Oct1 |
|---|---|---|---|---|
| $NmbGS_1$ | | $NmbGS_2$ | $NmbGS_3$ | Oct2 |
| $NmbGS_3$ | $NmbGS_4$ | $NmbGS_5$ | $NmbGS_6$ | Oct3 |
| $NmbGS_6$ | $NmbGS_7$ | $NmbGS_8$ | | Oct4 |

FIG. 2

First node    Second node

301. First MAC CE

302. Second MAC CE

303. Determine, based on the first MAC CE and the second MAC CE, a number of guard symbols used or expected to be used in a second subcarrier spacing

FIG. 3

First node | Second node

400. First configuration information
(indicating a first correspondence)

401. Generate a first MAC CE

402. First MAC CE

403. Determine, based on the first MAC
CE, a number of guard symbols used or
expected to be used in a subcarrier
spacing of 480 kHz or 960 kHz

FIG. 4

First node | Second node

501. First indication information
(indicating a first offset value or a first
scaling value)

502. First MAC CE
(indicating a number of guard symbols)

503. Determine, based on the first offset
value and the first MAC CE, a number of
guard symbols used or expected to be
used in a subcarrier spacing of 480 kHz
or 960 kHz, or determine, based on the
first scaling value and the first MAC CE,
a number of guard symbols used or
expected to be used in a subcarrier
spacing of 480 kHz or 960 kHz

FIG. 5

First node | Second node

601. First MAC CE →

602. When a first condition is met, determine a first scaling value based on a subcarrier spacing in a first MAC CE, and determine, based on the first scaling value and a number of guard symbols that is indicated by the first MAC CE, a number of guard symbols used or expected to be used in a subcarrier spacing of 480 kHz or 960 kHz

603. When the first condition is not met, determine, based on an SCS field in the first MAC CE, that the first MAC CE indicates a number of guard symbols used or expected to be used in a first subcarrier spacing, and determine, based on the first MAC CE, the number of guard symbols used or expected to be used in the first subcarrier spacing

604. Determine, based on the first MAC CE, the number of guard symbols used or expected to be used in the first subcarrier spacing

FIG. 6

Communication apparatus 700

701

702

Transceiver unit — Processing unit

FIG. 7

Communication apparatus 800

801

802

Processing unit — Transceiver unit

FIG. 8

Communication apparatus 900

┌─901                    ┌─902

Transceiver unit ●——● Processing unit

FIG. 9

┌─ 1000

Processor 1010 —— Transceiver 1030

Memory 1020    Communication apparatus

FIG. 10

┌─ 1133                                    ┌─ 1100

Communication apparatus

┌─ 1130                    ┌─ 1110

Transceiver                Processor

Transmitter

└─1131

┌─ 1120

1132 ─┐                    Memory

Receiver                   Computer program code

FIG. 11

<div style="text-align:center">**INTERNATIONAL SEARCH REPORT**</div>

| International application No. |
| --- |
| **PCT/CN2022/114189** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: 子载波, 间隔, 保护, 符号, IAB, subcarrier, spacing, guard, symbol, MAC, CE, SCS

**C. DOCUMENTS CONSIDERED TO BE RELEVANT**

| Category* | Citation of document, with indication, where appropriate, of the relevant passages | Relevant to claim No. |
| --- | --- | --- |
| Y | US 2021227544 A1 (QUALCOMM INC.) 22 July 2021 (2021-07-22) description, paragraphs 105-145 | 1-35 |
| Y | CN 112399585 A (HUAWEI TECHNOLOGIES CO., LTD.) 23 February 2021 (2021-02-23) description, paragraphs 205-223 | 1-35 |
| A | US 2021212070 A1 (QUALCOMM INC.) 08 July 2021 (2021-07-08) entire document | 1-35 |
| A | US 2021235345 A1 (QUALCOMM INC.) 29 July 2021 (2021-07-29) entire document | 1-35 |
| A | OPPO. "Higher layer impacts beyond 52.6GHz" *3GPP TSG-RAN WG2 Meeting #115 electronic, R2-2107255*, 06 August 2021 (2021-08-06), entire document | 1-35 |
| A | CN 112584518 A (HUAWEI TECHNOLOGIES CO., LTD.) 30 March 2021 (2021-03-30) entire document | 1-35 |
| A | CN 110324906 A (VIVO COMMUNICATION TECHNOLOGY CO., LTD.) 11 October 2019 (2019-10-11) entire document | 1-35 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 November 2022** | **25 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

| International application No. |
|---|
| **PCT/CN2022/114189** |

| Patent document cited in search report | | | Publication date (day/month/year) | Patent family member(s) | | | Publication date (day/month/year) |
|---|---|---|---|---|---|---|---|
| US | 2021227544 | A1 | 22 July 2021 | WO | 2021150451 | A1 | 29 July 2021 |
| CN | 112399585 | A | 23 February 2021 | WO | 2021032065 | A1 | 25 February 2021 |
| | | | | KR | 20220050157 | A | 22 April 2022 |
| | | | | US | 2022174670 | A1 | 02 June 2022 |
| | | | | EP | 4017177 | A1 | 22 June 2022 |
| | | | | AU | 2020334822 | A1 | 10 March 2022 |
| | | | | IN | 202247009840 | A | 11 March 2022 |
| US | 2021212070 | A1 | 08 July 2021 | None | | | |
| US | 2021235345 | A1 | 29 July 2021 | WO | 2021154843 | A1 | 05 August 2021 |
| CN | 112584518 | A | 30 March 2021 | WO | 2021063372 | A1 | 08 April 2021 |
| CN | 110324906 | A | 11 October 2019 | None | | | |

Form PCT/ISA/210 (patent family annex) (January 2015)

**REFERENCES CITED IN THE DESCRIPTION**

**Patent documents cited in the description**

- CN 202111021931